(19) Europäisches Patentamt
European Patent Office
Office européen des brevets

(11) EP 2 541 819 A1

(12) **EUROPEAN PATENT APPLICATION**
published in accordance with Art. 153(4) EPC

(43) Date of publication:
**02.01.2013 Bulletin 2013/01**

(21) Application number: **11747239.9**

(22) Date of filing: **17.02.2011**

(51) Int Cl.:
***H04J 11/00*** *(2006.01)* ***H04J 1/00*** *(2006.01)*

(86) International application number:
**PCT/JP2011/053354**

(87) International publication number:
**WO 2011/105275 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 JP 2010043095**

(71) Applicant: **Sharp Kabushiki Kaisha**
**Osaka-shi, Osaka 545-8522 (JP)**

(72) Inventors:
- **HAMAGUCHI Yasuhiro**
  **Osaka-shi, Osaka 545-8522 (JP)**
- **YOKOMAKURA, Kazunari**
  **Osaka-shi, Osaka 545-8522 (JP)**
- **NAKAMURA, Osamu**
  **Osaka-shi, Osaka 545-8522 (JP)**
- **GOTO, Jungo**
  **Osaka-shi, Osaka 545-8522 (JP)**
- **TAKAHASHI, Hiroki**
  **Osaka-shi, Osaka 545-8522 (JP)**
- **TO, Shimpei**
  **Osaka-shi, Osaka 545-8522 (JP)**

(74) Representative: **Müller - Hoffmann & Partner**
**Patentanwälte**
**Innere Wiener Strasse 17**
**81667 München (DE)**

# (54) WIRELESS COMMUNICATION SYSTEM, RADIO TRANSMITTING APPARATUS AND RADIO TRANSMITTING METHOD

(57) A wireless communication system includes: wireless transmission devices; and a wireless reception device. Each of the wireless transmission devices is configured to transmit data by transforming a time domain signal into frequency domain signals to obtain first frequency signals, clipping a part of the first frequency signals to generate second frequency signals, and allocating the second frequency signals onto subcarriers. The wireless reception device is configured to demodulate, from signals received, time domain data transmitted. Communication is performed using a clipping rate set for each of the wireless transmission devices, the clipping rate being the number of the second frequency signals divided by the number of the first frequency signals.

FIG. 1

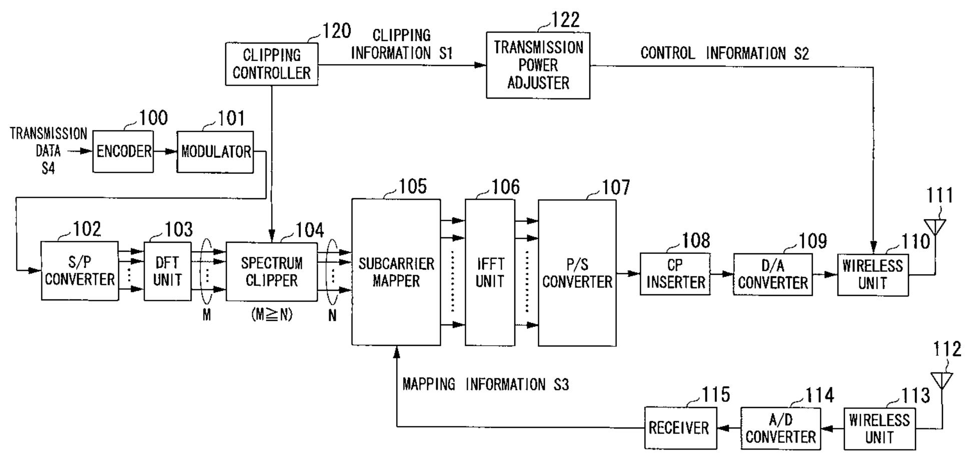


EP 2 541 819 A1

Printed by Jouve, 75001 PARIS (FR)

## Description

TECHNICAL FIELD

The present invention relates to a wireless communication system, a wireless transmission device and a wireless transmission method.
Priority is claimed on Japanese Patent Application No. 2010-043095, filed February 26, 2010, the content of which is incorporated herein by reference.

BACKGROUND ART

Along with the recent increase in the amount of data communication, the need for mobile communication systems with higher frequency use efficiency has been increasing. Various considerations regarding single-cell reuse cellular systems are in progress. The standardization of an E-UTRA (Evolved Universal Terrestrial Radio Access) system, which is one of the single-cell reuse cellular systems, has been considered primarily by 3GPP (3rd Generation Partnership Project). Regarding the E-UTRA system, OFDMA (Orthogonal Frequency Division Multiple Access) has been considered as one of prospective downlink transmission schemes. Additionally, non-contiguous/contiguous DFT-S-OFDM (Discrete Fourier Transform Spread OFDM which supports non-contiguous use of frequencies and contiguous use of frequencies) has been considered as a leading prospective uplink transmission scheme.
This OFDMA is a scheme for a user to access in units of resource blocks (RB) divided by time and frequency, using OFDM signals with excellent tolerance to multi-path fading. However, the OFDMA has high PAPR (Peak-to-Average Power Ratio) characteristics, and therefore is not suitable to uplink transmission for which the transmission power is significantly limited.
Regarding the DFT-S-OFDM, on the other hand, contiguous frequencies (RB) are used, thereby maintaining the PAPR characteristics excellent with respect to multi-carrier schemes, such as OFDM, and therefore securing a wide coverage. Additionally, regarding the DFT-S-OFDM, non-contiguous frequencies are used to flexibly use frequencies, thereby suppressing deterioration of the PAPR characteristics to some extent. Further, regarding the non-contiguous/contiguous DFT-S-OFDM, it has been considered to switch between the non-contiguous and the contiguous based on the transmission power (see, for example, Patent Document 1).
FIG. 11 illustrates an example of a configuration of a terminal device in a case where the non-contiguous/contiguous DFT-S-OFDM is used for uplink transmission. As shown in FIG. 11, firstly, an encoder 700 performs error correction coding on transmission data S701. Then, a modulator 701 modulates the transmission data S701. Then, an S/P converter 702 performs serial-to-parallel conversion on the modulated transmission signal. A DFT (Discrete Fourier Transform) unit 703 transforms the transmission signals resulting from the serial-to-parallel conversion into frequency domain signals.
Then, a subcarrier mapper 704 maps the transmission signals transformed into the frequency domain signals onto subcarriers (resource blocks) to be used for transmission. Additionally, the subcarrier mapper 704 performs this mapping based on mapping information S702 which is transmitted from a base station device, is received by a reception antenna unit 711, and then is demodulated by a receiver 704 via a wireless unit 712 and an A/D (analog-to-digital) converter 713. The subcarrier mapper 704 inserts zero onto subcarriers not to be used for transmission. The subcarrier mapper 704 maps to allocated subcarriers (resource blocks), all the signals resulting from the time-to-frequency transform.
Methods of mapping transmission signals onto subcarriers to be used for transmission include: SC-FDMA (Single Carrier-Frequency Division Multiple Access) in which contiguous subcarriers are used; and clustered DFT-S-OFDM in which non-contiguous subcarriers are allocated. The SC-FDMA is a method for which the PAPR characteristics are significantly excellent. The clustered DFT-S-OFDM is a method for which deterioration of the PAPR characteristics is tolerated, but the flexibility of mapping is emphasized.
FIG. 12A is a diagram illustrating an example of arrangement in a case of the SC-FDMA. FIG. 12B is a diagram illustrating an example of arrangement in a case of the clustered DFT-S-OFDM. FIG. 12A illustrates a case where each of 6 RBs (reference symbol sg1101) includes 12 subcarriers, 3 RBs (reference symbol sg1111) are assigned to a user A, 1 RB (reference symbol sg1112) is assigned to a user B, and 2 RBs (reference symbol sg1113) are assigned to a user C. FIG. 12B illustrates a case where each of 6 RBs (reference symbol sg1201) includes 12 subcarriers, 3 RBs (reference symbols sg1211 and sg 1214) are assigned to the user A, 1 RB (reference symbols sg1212 and sg1215) is assigned to the user B, and 2 RBs (reference symbol sg1213) are assigned to a user C. In the case of FIG. 12A, resource blocks RB are assigned to the users A, B, and C in increasing order of frequency. In the case of FIG. 12B, 1 RB (reference symbol sg1201) is first assigned to the user A in increasing order of frequency, 1 RB (reference symbol sg1212) is assigned to the user B, 1RB (reference symbol sg1213) is assigned to the user C, 2 RBs (reference symbol sg1214) are assigned to the user A, and finally 1 RB (reference symbol sg1215) is assigned to the user B. In other words, in the case of FIG. 12B, 3 RBs (reference symbols sg1211 and sg1214) are discontinuously assigned.

With reference back to FIG. 11, an IFFT (Inverse Fast Fourier Transform) unit 705 receives the transmission signals mapped onto the subcarriers to be used for transmission, and transforms the received transmission signals from the frequency domain signals into time domain signals. Then, the transformed signals are converted from the parallel signals into a serial signal via a P/S converter 706, and thereafter is input to a CP (Cyclic Prefix) inserter 707. The CP inserter 707 inserts a CP (signal which is a copy of a rear part of the symbol resulting from the IFFT). Then, the D/A (analog-to-digital) converter 708 converts into an analog signal, the signal into which the CP has been inserted. Then, the wireless unit 709 upconverts the signal converted into the analog signal, into a wireless frequency band signal, and transmits the wireless frequency band signal from the transmission antenna 710. The transmission signal generated in such a manner has more excellent PAPR characteristics than those of a multi-carrier signal in the both cases of the SC-FDMA and the clustered DFT-S-OFDM.

Additionally, FIG. 13 illustrates a configuration of a base station device that receives the non-contiguous/contiguous DFT-S-OFDM signals transmitted from the terminal device shown in FIG. 11. As shown in FIG. 13, firstly, a wireless unit 801 converts the signal received by an antenna unit 800 into an A/D-convertible frequency signal. Then, the A/D converter 802 converts into a digital signal, the signal converted into the frequency signal. Then, a synchronizer 803 establishes symbol synchronization on that digital signal. Then, a CP remover 804 removes the CP for each symbol. After the CP is removed, the digital signal is converted from the serial signal into parallel signals via an S/P converter 805. An FFT unit 806 transforms those time domain signals into frequency domain signals. Then, a channel estimator 807 receives from the FFT unit 806, pilot signals for channel estimation S801 which have been transformed into the frequency domain signals (known signals transmitted with data signals by the terminal device). Then, the channel estimator 807 performs channel estimation using the received pilot signals S801 for channel estimation. The signal received by the base station device is constituted of frequency division multiplexed signals transmitted from multiple terminal devices, as shown in FIGS. 12A to 12B. With respect to the signals output from the FFT unit 806, a subcarrier demapper 808 bundles subcarriers to be used for each terminal device, based on mapping information preliminarily determined by a scheduler 812 (information indicating which terminal device is using which subcarriers) S802. Then, an equalizer 809 performs, in the frequency domain, an equalization process on the received subcarriers bundled for each terminal device, using a channel estimation value S803 output from the channel estimator 807. Further, an IDFT unit 810 transforms the frequency domain signals into a time domain signal. After the transform, this time domain signal is subjected to demodulation and error correction coding by a demodulator and error correction decoder 811, thereby performing error correction decoding. Thus, the transmission data for each terminal device are reproduced to generate reception data S804.

Additionally, the FFT unit 806 transfers to the scheduler 812, the pilot signals 801 to be used for measuring reception levels. Based on a result of the measurement of reception levels with use of those signals, based on a result of the measurement of reception levels with use of those signals, the scheduler 812 performs a scheduling in consideration of a channel state for each terminal device to determine the mapping information S802. Then, a transmitter 813 performs modulation and the like on the mapping information S802 determined by the scheduler 812. After the modulation, an antenna unit 816 transmits to each terminal device, the mapping information received via a D/A unit 814 and a wireless unit 815. Then, that mapping information is used for transmission of the following frames on the terminal device side.

CITATION LIST

[Patent Document]

[Patent Document 1] International Publication No. 2008/081876

DISCLOSURE OF THE INVENTION

Problems to be Solved by the Invention

However, even in the case of using the non-contiguous/contiguous DFT-S-OFDM, there is a problem in that the cell throughput and the throughput for terminal devices are not sufficient in some cases, under the current communication environments in which tightness of frequency resources have been more and more accelerating along with an increase in the number of users and the amount of information.

The present invention has been made in view of the above situations. An object of the present invention is to provide a wireless communication system, a wireless transmission device and a wireless transmission method, which enables an improvement of the cell throughput and the throughput for terminal devices.

Means for Solving the Problems

To achieve the above object, a wireless communication system according to the present invention includes: a plurality of wireless transmission devices; and a wireless reception device. Each of the wireless transmission devices is configured to transmit data by transforming a time domain signal into frequency domain signals to obtain first frequency signals, clipping a part of the first frequency signals to generate second frequency signals, and allocating the second frequency signals onto subcarriers. The wireless reception device is configured to demodulate, from signals received, time domain data transmitted. Communication is performed using a clipping rate set for each of the wireless transmission devices, the clipping rate being the number of the second frequency signals divided by the number of the first frequency signals.

Additionally, regarding the wireless communication system according to the present invention, information relating to a transmission power for the wireless transmission device may be determined based on the clipping rate, or the clipping rate may be determined based on the information relating to the transmission power for the wireless transmission device.

Additionally, regarding the wireless communication system according to the present invention, the information relating to the transmission power may be at least one of the transmission power for the wireless transmission device, the allowable maximum power of a transmission amplifier included in the wireless transmission device, and a distance from the wireless transmission device to the wireless reception device.

Additionally, regarding the wireless communication system according to the present invention, communication may be performed without performing clipping in a case that a transmission power for transmitting data is higher than a predetermined value.

Additionally, regarding the wireless communication system according to the present invention, the wireless transmission devices may be grouped based on distances from the wireless reception device to the wireless transmission devices. The wireless transmission devices belonging to a group associated with a large distance from the wireless reception device may be configured not to perform clipping.

Additionally, regarding the wireless communication system according to the present invention, the wireless reception device may be configured to report to the wireless transmission device, positions of subcarriers to which the second frequency signals are to be mapped, and any one of the number of first frequency signals and the clipping rate.

Additionally, regarding the wireless communication system according to the present invention, the wireless reception device may be configured to report to the wireless transmission device, information relating to positions of frequencies to be used by the wireless transmission device. The wireless transmission device may be configured to perform transmission without using a part of the frequencies at the positions of the frequencies reported.

Additionally, regarding the wireless communication system according to the present invention, the wireless transmission device may be configured not to perform clipping in a case where the wireless transmission device operates in a low power consumption mode.

Additionally, regarding the wireless communication system according to the present invention, the wireless reception device may be configured to iteratively perform a demodulation process in a case that the wireless transmission device performs clipping to transmit data.

To achieve the above object, a wireless transmission device according to the present invention includes: a time-frequency-domain transformer configured to transform a time domain signal into frequency domain signals to generate first frequency signals; a clipper configured to clip a part of the first frequency signals to generate second frequency signals; a clipping controller configured to generate clipping control information based on a clipping rate that is the number of the second frequency signals divided by the number of the first frequency signals, and control the clipper; a subcarrier mapper configured to map the second frequency signals onto subcarriers; a transmission power adjuster configured to adjust, based on the clipping control information, a transmission power for a transmission signal including the subcarriers; and a wireless unit configured to transmit transmission data based on the clipping rate controlled by the clipping controller and the transmission power adjusted by the transmission power adjuster.

Additionally, regarding the wireless transmission device according to the present invention, in a case that each of a plurality of wireless transmission devices present within a coverage area of communication with the same wireless reception device has the same number of the first frequency signals, the power adjuster may be configured to adjust the transmission power such that the transmission power is higher as the clipping rate is higher.

Additionally, regarding the wireless transmission device according to the present invention, the transmission power adjuster may be configured to set the maximum value of the transmission power so as to differ based on the clipping rate.

Additionally, regarding the wireless transmission device according to the present invention, the wireless unit may further include a high power amplifier unit configured to perform high gain amplification. The transmission power adjuster may be configured to adjust the transmission power so that an operating region of the high power amplifier differs according to the clipping rate.

Additionally, regarding the wireless transmission device according to the present invention, the transmission power adjuster may be configured to control an average power of inputs to the high power amplifier according to the clipping rate.

Additionally, regarding the wireless transmission device according to the present invention, the transmission power adjuster may be configured to control, based on the clipping rate, an average power of inputs to the high power amplifier so as to be lower than the maximum allowable transmission power for the wireless transmission device and to be within a linear region operating area.

To achieve the above object, a wireless transmission method for a wireless transmission device according to the present invention includes: a time-frequency-domain transforming step for a time-frequency-domain transformer to transform a time domain signal into frequency domain signals to generate first frequency signals; a clipping step for a clipper to clip a part of the first frequency signals to generate second frequency signals; a clipping control step for a clipping controller to generate clipping control information based on a clipping rate that is the number of the second frequency signals divided by the number of the first frequency signals, and control the clipper; a subcarrier mapping step for a subcarrier mapper to map the second frequency signals onto subcarriers; a transmission power adjusting step for a transmission power adjuster to adjust, based on the clipping control information, a transmission power for a transmission signal including the subcarriers; and a wireless step for a wireless unit to transmit transmission data based on the clipping rate controlled by the clipping controller and the transmission power adjusted by the transmission power adjuster.

## Effects of the Invention

According to the present invention, it is possible to improve the cell throughput and the throughput for terminal devices.

## BRIEF DESCRIPTION OF THE DRAWINGS

FIG. 1 is a block diagram illustrating a wireless transmission device according to a first embodiment.

FIG. 2 is a diagram illustrating the relationship between a non-clipping rate and a CM in a case where 240 subcarriers are used and QPSK is used as a modulation scheme according to the first embodiment.

FIG. 3A is a diagram illustrating selection of an operating point with respect to input-output characteristics of an HP amplifier according to related art.

FIG. 3B is a diagram illustrating selection of an operating point with respect to input-output characteristics of an HP amplifier according to the present invention.

FIG. 4 is a diagram illustrating the relationship between the average power of inputs to the HP amplifier and a non-clipping rate according to the first embodiment.

FIG. 5A is a diagram illustrating the position relationship between a wireless transmission device (terminal device) that transmits clipped DFT-S-OFDM signals and a wireless reception device (base station device) in a cellular system according to a third embodiment.

FIG. 5B is a diagram illustrating states of first frequency signals and second frequency signals with respect to the wireless transmission devices A, B, and C in the cellular system according to the third embodiment.

FIG. 6 is a diagram illustrating the relationship between each terminal device and a non-clipping rate according to the third embodiment.

FIG. 7A is a diagram illustrating assignment in the conventional case where clipping according to the fourth embodiment is not performed.

FIG. 7B is a diagram illustrating how each terminal device performs clipping according to the non-clipping rate specified or preliminarily reported to the terminal device according to the third embodiment.

FIG. 7C is a diagram illustrating arrangement after the clipping is performed according to the third embodiment.

FIG. 8A is a diagram illustrating a method of improving the throughput per terminal device according to the third embodiment (a diagram illustrating assignment in a case where clipping is not performed).

FIG. 8B is a diagram illustrating a method of improving the throughput per terminal device according to the third embodiment (a diagram illustrating how each terminal device performs clipping according to the non-clipping rate).

FIG. 8C is a diagram illustrating a method of improving the throughput per terminal device according to the third embodiment (a diagram illustrating an arrangement after clipping is performed).

FIG. 9A is a diagram illustrating a method of improving the throughput per terminal device according to the third embodiment (a diagram illustrating an assignment in a case where clipping is not performed).

FIG. 9B is a diagram illustrating a method of improving the throughput per terminal device according to the third embodiment (a diagram illustrating how each terminal device performs clipping according to the non-clipping rate).
FIG. 9C is a diagram illustrating a method of improving the throughput per terminal device according to the third embodiment(a diagram illustrating an arrangement after clipping is performed).
FIG. 10 is a block diagram illustrating a base station device according to a fifth embodiment.
FIG. 11 is a diagram illustrating an example of a configuration of a terminal device in a case where a non-contiguous/contiguous DFT-S-OFDM according to the related art is used for uplink transmission.
FIG. 12A is a diagram illustrating an example of an arrangement in a case of SC-FDMA according to the related art.
FIG. 12B is a diagram illustrating an example of an arrangement in a case of clustered DFT-S-OFDM according to the related art.
FIG. 13 is a diagram illustrating an example of a configuration of a base station device that receives non-contiguous/contiguous DFT-S-OFDM signals transmitted from the terminal device according to the related art shown in FIG. 11.

BEST MODE FOR CARRYING OUT THE INVENTION

Hereinafter, embodiments of the present invention are explained in detail with reference to FIGS. 1 to 10. The present invention is not limited to the embodiments, and various modifications can be made within the scope of the technology.

(First Embodiment)

FIG. 1 is a block diagram illustrating a wireless transmission device according to the present invention. As an example, this wireless communication device is a terminal device that performs transmission to a base station device in a wireless communication system. Hereinafter, a base station device is referred to as a wireless reception device. This wireless transmission device includes: an encoder 100; a modulator 101; an S/P converter 102; a DFT unit 103; a spectrum clipper 104; a subcarrier mapper 105; an IFFT unit 106; a P/S converter 107; a CP inserter 108; a D/A converter 109; a wireless unit 110; a transmission antenna unit 111; a reception antenna unit 112; a wireless unit 113; an A/D converter 114; a receiver 115; a clipping controller 120; and a transmission power adjuster 122.

The encoder 100 receives transmission data S4, performs error correction coding on the received transmission data S4, and outputs to the modulator 101, the transmission data subjected to the error correction coding.
The modulator 101 receives the transmission data subjected to the error correction coding, modulates the transmission data subjected to the error correction coding, and outputs the modulated transmission signal to the S/P converter 102.
The S/P converter 102 receives the modulated transmission signal, converts the modulated transmission signal from a serial signal into parallel signals, and then outputs to the DFT unit 103, the signals converted into the parallel signals.
The DFT (Discrete Fourier Transform) unit (time-frequency domain transformer) 103 receives the transmission data resulting from the serial/parallel conversion, performs discrete Fourier transform on the transmission data converted into the parallel signals to transform the time domain signals into frequency domain signals. The signals transformed into the frequency domain signals are referred to as first frequency signals, hereinafter.

Based on a clipping control signal S1 output from the clipping controller 120, the spectrum clipper (clipper) 104 performs clipping (clipping) on the frequency signals (spectra) transformed into the frequency domain signals. Regarding a clipping rate, various cases can be considered, such as a case where a clipping rate for each transmission device is reported from a base station device or the like, similarly to information regarding subcarriers to be used, a case where the clipping rate is reported in synchronization with a change in the position information of the terminal device (whether or not the terminal device is located at a cell edge), or a case where a transmission device uniquely sets the clipping rate. Operation of clipping is operation of clipping some signals (spectra) output from the DFT unit 103, based on a predetermined rule. When the number of signals input to the spectrum clipper 104 is M, and the number of signals output from the spectrum clipper 104 is N, then $M \geq N$. Hereinafter, N/M is defined as a non-clipping rate, and (M-N)/M is defined as a clipping rate. As the non-clipping rate decreases, the clipping rate increases. Additionally, outputs from the spectrum clipper 104 are referred to as second frequency signals, hereinafter. When the non-clipping rate is 1, the spectrum clipper 104 outputs, without performing clipping, the received first frequency signals as they are, as the second frequency signals. Additionally, in a case where some signals (spectra) output from the DFT unit 103 are clipped based on a predetermined rule in the operation of clipping, for example, the clipping may be performed from a high frequency band first or from a low frequency first. Alternatively, the clipping may be performed from both ends of a band.

The subcarrier mapper (subcarrier allocator) 105 receives the signals resulting from the clipping performed by the spectrum clipper 104 and mapping information S3 demodulated by the receiver 115. Additionally, the subcarrier mapper 105 maps, based on the mapping information S3, the received signals onto subcarriers to be used for transmission. Further, the subcarrier mapper 105 inserts zero onto subcarriers not to be used for the transmission. Subcarriers to be mapped are contiguous in some cases and non-contiguous in other cases.
The mapping information is transmitted from the base station device (wireless reception device), and received by the reception antenna unit 112, and then demodulated by the receiver 115 via the wireless unit 113 and the A/D converter 114. Then, the receiver 115 outputs the demodulated mapping information s3 to the subcarrier mapper 105.

The IFFT unit 106 receives transmission signals that the subcarrier mapper 105 has mapped onto the subcarriers to be used for transmission. Then, the IFFT unit 106 performs inverse Fourier transform on the received transmission signals to transform the frequency domain signals into time domain signals. Then, the IFFT unit 106 outputs the transformed time domain signals to the P/S converter 107.

The P/S (parallel to serial) converter 107 receives the transformed time domain signals. Then, the P/S converter 107 converts the transformed time domain signals from the parallel signals into a serial signal. Then, the P/S converter 107 outputs to the CP inserter 108, the signals converted into the serial signal.

The CP (Cyclic Prefix) inserter 108 receives the signal converted into the serial signal. Then, the CP (Cyclic Prefix) inserter 108 inserts a CP (a signal generated by duplicating a rear part of a symbol resulting from the IFFT). Then, the CP (Cyclic Prefix) inserter 108 outputs to the D/A converter 109, the signal into which the CP has been inserted.

The D/A converter 109 converts the signal, into which the CP has been inserted, from the digital signal into an analog signal. Then, the D/A converter 109 outputs to the wireless unit 110, the signal converted into the analog signal.

The wireless unit 110 receives the signal converted into the analog signal. Then, the wireless unit 110 upconverts into a wireless frequency band signal, the signal converted into the analog signal. Then, the wireless unit 110 transmits from the transmission antenna unit 111, the signal upconverted into the wireless frequency band signal. Here, the wireless unit 110 includes: a TPC (Transmission Power Control) amplifier (a high power amplifier; a power amplifier with a gain that is 1 or less is also included in the TPC amplifier); and an HP (High Power) amplifier that achieves a higher output.

Further, the wireless unit 110 controls a gain and the like of the TPC amplifier, based on control information S2 output from the transmission power adjuster 122.

The transmission power adjuster 122 generates a control signal S2 that controls the gain of the TPC amplifier, the maximum transmission power that is an output from the HP amplifier, or the like, while regarding the clipping information S1 output from the clipping controller 120 as one of parameters. Then, the transmission power adjuster 122 outputs the generated control signal S2 to the wireless unit 110. In the present invention, the power for transmitting signals which is adjusted by controlling the gain of the TPC, the maximum transmission power by which signals can be transmitted, and the like, are referred to as information relating to the transmission power. Occasionally, this information includes the distance from the base station device, which is considered in controlling the gain of the TPC amplifier. The reason for considering S 1 in controlling the TPC amplifier is to make adjustment so that the total transmission power is not changed according to the presence or absence of the clipping, or a change in the clipping rate.

Here, this adjustment can be performed for digital signals, and is not always necessary. The relationship between the clipping controller and the transmission power adjuster is illustrated in FIG. 1 under an assumption that the information relating to the transmission power is controlled based on the clipping information S1. However, there are some cases where the information relating to the transmission power and the clipping control are independently controlled, and those cases are also within the scope of the present invention.

Additionally, the information relating to the transmission power may be determined first, and thereafter the clipping rate may be determined.

FIG. 2 is a diagram illustrating the relationship between a non-clipping rate and a CM (Cubit Metric) in a case where 240 subcarriers (240 indicates the number of subcarriers) are used, and QPSK (Quadrature Phase Shift Keying) is used as a modulation scheme. The CM is a method of evaluating transmission signals in consideration of backoff of the HP amplifier (the difference between the saturation output power and the actual operation output power), which is equivalent to the PAPR characteristics. As a value of the CM decreases, the PAPR characteristics are more excellent (the PAPR is smaller).

FIG. 2 illustrates a case where the number M of signals input to the spectrum clipper 104 is fixed. In this case, as the non-clipping rate decreases, a CM value deteriorates. Here, the CM value is just one example of conditions, and varies depending on the number of subcarriers to be used, a modulation scheme to be used, and the like. Additionally, FIG. 2 illustrates the case where data resulting from the clipping are mapped onto contiguous subcarriers. If those data are mapped onto discrete subcarriers, the CM characteristics further deteriorate. Further, when clipping is used in the cellular system under an assumption that the wireless reception device can perform precise demodulation, more users can be multiplexed if the non-clipping rate is set to be as low as possible, thereby enhancing the throughput.

Hereinafter, in the present specification, clipping is performed on DFT-S-OFDM signals, which is referred to as clipped DFT-S-OFDM. However, the present invention is applicable not only to the DFT-S-OFDM signals, but also to a method in which one piece of information is divided into multiple data pieces to be transmitted. Another typical method is an MC-CDM (Multi-Carrier Code Division Multiplexing). Further, the present invention may be combined with a transmission method using multiple transmission and reception antennas, such as MIMO (Multiple Input Multiple Output; a spatial division multiplexing method using multiple antennas).

Hereinafter, a method for the wireless unit 110 to change an operating point of the HP amplifier according to the non-clipping rate is explained.

FIG. 3A is a diagram illustrating selection of an operating point with respect to the input-output characteristics of the HP amplifier according to the related art. FIG. 3B is a diagram illustrating selection of an operating point with respect to the input-output characteristics of the HP amplifier according to the present invention.

As shown in FIGS. 3A and 3B, generally, an amplifier has a linear region (a reference symbol g101 shown in FIG. 3A, a reference symbol g111 shown in FIG. 3B) and a non-linear region (a reference symbol g102 shown in FIG. 3A, a reference symbol g112 shown in FIG. 3B). In many cases, the non-linear region indicates a region in which the output power does not increase in proportion to an increase in the input power, and corresponds to a region on the side of a high power input with respect to the input power. Regarding the wireless transmission device, distortion of transmission signals occurs in this non-liner region, thereby causing not only deterioration of characteristics of signals transmitted from the wireless transmission device, but also affecting other users simultaneously performing transmission or causing the out-of-system-band leakage power. In other words, it is not preferable to use the HP amplifier in the non-linear region.

In FIGS. 3A and 3B, I1 to I3 denote the average power of inputs to the HP amplifier. O1 to 03 denote the average power of outputs associated with the I1 to I3, respectively. I3 is higher than I2, and I2 is higher than I1 (I1<I2<I3). 03 is higher than 02, and 02 is higher than O1 (O1<O2<O3). Additionally, two-headed dotted arrows a1 to a6 indicate ranges of change of instantaneous powers of input signals in the cases of the non-clipping rates C1 to C3, respectively. The two-headed dotted arrows a1 and a4 indicate ranges of change of the signal power in the case of C1. The two-headed dotted arrows a2 and a5 indicate ranges of change of the signal power in the case of C2. The two-headed dotted arrows a3 and a6 indicate ranges of change of the signal power in the case of C3. Additionally, C3 is higher than C2, and C2 is higher than C1 (C1 <C2<C3). The fact that a change in the instantaneous power is larger as the non-clipping rate decreases is attributed to the CM characteristics shown in FIG. 2.

Additionally, in light of the related art, the HP amplifier is caused to operate at an operating point, such as I1, at which a signal is not distorted for all the non-clipping rates C1 to C3, as shown in FIG. 3A. In this case, variations in the instantaneous power of input signals are shown by two-headed dotted arrows a1 to a3.

On the other hand, in the present invention, as shown in FIG. 3B, the power of inputs to the HP amplifier is varied according to the non-clipping rate. In other words, in a case where the non-clipping rate is set to be C1 that is low, and a variation in the instantaneous power of input signals is large as shown by a two-headed dotted arrow a4, the average power of inputs to the HP amplifier is set to be I1 that is low. By increasing the average power of inputs to the HP amplifier to I2 and then I3 as the non-clipping rate is increased to C2 and then C3, it is possible to make the transmission power high when a non-clipping rate is high, without causing transmission signals to be distorted, thereby achieving a merit in that the communication distance can be lengthened.

In other words, the transmission power adjuster 122 generates a control signal S2 based on the clipping information S1 output from the clipping controller 120. Based on the generated control signal S2, the TPC amplifier of the wireless unit 110 varies transmission power to change the power of inputs to the HP amplifier.

Additionally, in a case where transmission power control is performed, such as in a case of a cellular system, the average power of inputs to the HP amplifier varies in some cases. In such a case, the relationship between the average power of inputs to the HP amplifier and the non-clipping rate is set as shown in FIG. 4, thereby improving the throughput without causing transmission signals to be distorted. FIG. 4 is a diagram illustrating the relationship between the average power of inputs to the HP amplifier and the non-clipping rate. In other words, with reference also to FIG. 3B, if the average power X of inputs to the HP amplifier is lower than the small value I1, the non-clipping rate is set to be a low value C1. As the average power X of inputs to the HP amplifier increases, the non-clipping rate is set to be greater values C2, C3, and 1. FIG. 4 shows just an example, and the respective average powers of inputs to the HP amplifier are exclusively set. However, the respective average powers of inputs to the HP amplifier may be set so that those average powers overlap one another. Here, the reason that the non-clipping rate is set to be 1 in the region where the average power of inputs to the HP amplifier is the highest is to prevent distortion as much as possible.

In other words, the transmission power adjuster 122 stores the relationship according to a modulation scheme and the number of subcarriers. Additionally, the transmission power adjuster 122 generates the control signal S2 based on the stored relationship and the clipping information received from the clipping controller 120. Then, the transmission power adjuster 122 outputs the generated control signal S2 to the wireless unit 110. Further, based on the control signals S2, the wireless unit 110 controls the average power of inputs to the HP amplifier.

As explained above, in light of the fact that the CM characteristics (PAPR characteristics) varies according to a clipping rate, the power of inputs to the HP amplifier is controlled based on the clipping rate to change the transmission power, thereby improving the cell throughput and the throughput for terminal devices.

(Second Embodiment)

In the second embodiment, with reference to a method described in specifications of the next generation cellular communication (3.9G), particularly, a method using the relationship between transmission power control and clipping is explained under an assumption that the clipped DFT-S-OFDM is used for an uplink. For 3.9G, it has been determined to use the SC-FDMA. Formula (1) is a formula used to determine a transmission power value to be used for uplink data communication defined in a specification of the next generation cellular communication (3.9G).

$$P_{PUSCH}(i)=\min\{P_{CMAX},\ 10\times\log_{10}(M_{PUSCH}(i))+P_{O_PUSCH}(j)+\alpha(j)\times PL+\Delta_{TF}(i)+f(i)\} \quad \cdots(1)$$

In formula (1), PUSCH is an abbreviation of a physical uplink shared channel, and denotes a data channel for transmitting uplink data. $P_{PUSCH}(i)$ denotes a transmission power value for the i-th frame. j denotes a parameter determined according to a method of assigning frequencies to be used. A value of j differs among a case where assignment of frequencies is determined for every communication opportunity (dynamic scheduled grant), a case where assignment of frequencies is determined semi-persistently (semi-persistent scheduled grant), a case where a random access channel is used, and the like. min{X, Y} denotes a function to select the minimum value of X and Y. $P_{O\text{-}PUSCH}$ denotes the transmission power that is a basis for PUSCH, and is defined by a sum of a value specified by the base station device and a value set to an individual terminal device. $M_{PUSCH}$ denotes the number of resource blocks (units for the terminal device to access the base station device) to be used for transmitting data channels. $M_{PUSCH}$ indicates that as the number of RBs to be used increases, the transmission power increases. Additionally, PL denotes pass loss (propagation loss). $\alpha$ denotes a coefficient by which the pass loss is multiplied, and is specified by a higher layer. $\Delta_{TF}$ denotes an offset value according to a modulation scheme or the like. f denotes an offset value calculated by the base station device using a control signal (a level of transmission power control by a closed loop). Additionally, $P_{CMAX}$ is a value of the maximum transmission power. $P_{CMAX}$ is the physical maximum transmission power in some cases, and is specified by a higher layer in other cases. Hereinafter, for simplification of the formula, part of formula (1) is replaced with LTE_P as shown in formula (2).

$$LTE_P=10\times\log_{10}(M_{PUSCH}(i))+P_{O_PUSCH}(j)+\alpha(j)\times PL+\Delta_{TF}(i)+f(i) \quad \cdots(2)$$

As problems in the method using the clipped DFT-S-OFDM, there is deterioration of the reception performance, in addition to deterioration of CM (deterioration of the PAPR characteristics) caused by clipping (regarding the reception performance, it is possible to prevent deterioration by devising the wireless reception device, and the details thereof are explained later). Formula (3) shows transmission power control in consideration of deterioration of the performance of reception by the transmission power adjuster 122.

$$P_{PUSCH}(i)=\min\{P_{CMAX},\ LTE_P+CL(C)\} \quad \cdots(3)$$

Formula (3) differs from formula (1) in that CL(C) (positive value) is added. CL(C) is a value to compensate, by increasing the transmission power, the reception performance that deteriorates according to a non-clipping rate C. CL(C) indicates correction such that CL(C1)=3dB when the non-clipping rate is C1, CL(C2)=1.5dB when the non-clipping rate is C2, or CL(C3)=0.5dB when the non-clipping rate is C3.

In other words, the wireless unit 110 corrects the transmission power based on the control signal S2 generated by the transmission power adjuster 122, thereby improving the reception performance on the side of the wireless reception device.

Additionally, as the wireless reception device, a high-performance wireless reception device (for example, a device that can use non-linear iterative equalization (such as frequency-domain SC/MMSE (Soft Canceller followed by Minimum Mean Square Error) turbo equalization)) is used in some cases, but is not used in other cases. In consideration of this, formula (4) may be used.

$$P_{PUSCH}(i)=\min\{P_{CMAX},\ LTE_P+R\times CL(C)\} \quad \cdots(4)$$

If the wireless reception device is high-performance, for example, the wireless unit 110 sets R to be 0. If the wireless reception device is not high-performance, the wireless unit 110 sets R to be 1. For this reason, if an advanced process by the wireless reception device (such as a process using non-linear iterative equalization (for example, frequency domain SC/MMSE turbo equalization) even in a case of receiving signals whose spectra is partially clipped) is used, it is possible for the wireless transmission device to suppress the transmission power, thereby suppressing the effect on other cells as much as possible.
In other words, based on the control signal S2 generated by the transmission power adjuster 122, the wireless unit 110 suppress the transmission power, and thus suppresses the power for transmission by the wireless transmission device, thereby making it possible to correct the reception performance by non-clipping.
Additionally, with respect to the formulas (3) and (4), the case where the wireless unit 110 of the wireless transmission device corrects the transmission power in consideration of the non-clipping rate has been shown. However, it is possible to correct deterioration of the reception performance using transmission control by a closed loop, that is, f (i) in formula (1).
It is assumed in formula (1) that the transmission bandwidth (the number of RBs) is variable. In this case, there is no problem if the wireless unit 110 of the wireless reception device precisely manages the transmission power of the terminal device. However, in a case where the management is not made precisely or is not performed, it becomes important to calculate the maximum value in the right side of formula (1). In other words, the wireless unit 110 of the wireless reception device limits the maximum value, thereby preventing the power from becoming a value prohibited by a system and preventing harm to human bodies caused by the excessive transmission power. Further, there can be considered to be another purpose of preventing the power of transmission performed by the terminal device from exceeding the performance of the HP amplifier, which causes transmission signals to be distorted.
For simplification of explanations, a case where $P_{CMAX}$ required by the system is identical to $P_{MAX}$ that is the maximum allowable transmission power (linear region operation rage) of the terminal device is assumed here. Formula (1) is modified into formula (5), and thereby the terminal device can prevent signals from being distorted even if the non-clipping rate is changed.
$$P_{PUSCH}(i)=\min\{P_{CMAX}-DST(C),\ LTE_P\} \quad \cdots(5)$$

DST(C) is a positive value which varies according to the non-clipping rate C, and which increases according to a decrease in the non-clipping rate C. The purpose of CL is to correct the reception performance by non-clipping, while the purpose of DST is to suppress distortion of transmission power caused by clipping. It can be understood from formula (5) that DST become effective when the transmission power exceeds the maximum value of the HP amplifier in the operation region.
In other words, the wireless unit 110 can prevent distortion of transmission signals caused by clipping, based on the control signal S2 generated by the transmission power adjuster 122.
As explained above, in light of the fact that the CM characteristics (PAPR characteristics) differ according to the clipping rate, transmission power control in consideration of deterioration of the reception performance is performed based on the clipping rate, or the power of transmission performed by the wireless transmission device is suppressed, thereby improving the cell throughput and the throughput for terminal devices.

(Third Embodiment)

In the third embodiment, a method of improving the cell throughput and the throughput for terminal devices by effectively using the clipped DFT-S-OFDM for an uplink in the cellular system is explained.
FIG. 5A is a diagram illustrating the position relationship between wireless transmission devices (terminal devices) 201 to 203 which transmit clipped DFT-S-OFDM signals and a wireless reception device (base station device) 210 which are included in a cellular system. It is assumed in the case of FIG. 5A that the farthest terminal device from the base station device 210 is the terminal device A (201), followed by the terminal device B (202) and the terminal device C (203) in this order. An ellipse 220 denotes a service coverage area in which the wireless base station device can communicate with the terminal devices. FIG. 6 is a diagram illustrating the relationship between each terminal device and a non-clipping rate according to the third embodiment.
As shown in FIGS. 5A and 6, the non-clipping rate is set to be higher as the terminal devices 201 to 203 are farther than the base station device 210, thereby making it possible to decrease the probability of signals being distorted. This is attributable to the fact that the terminal device farther from the base station device 210 requires the higher transmission power since communication with the same amount of data is performed with the same performance. FIG. 5B is a diagram illustrating states of the first frequency signals and the second frequency signals for the wireless transmission devices 201 to 203, with respect to the terminal devices A, B, and C. In FIG. 5B, the left side of an arrow, that is, the side of the starting point of the arrow, corresponds to the first frequency signals sg101. The right side of the arrow, that is, the side of the ending point of the arrow, corresponds to the second frequency signals (sg111 to sg113). As shown in FIG. 5B, among the second frequency signals, the reference symbol sg111 denotes the second frequency signals for the terminal A, the reference symbol sg 112 denotes the second frequency signals for the terminal B, and the reference symbol sg113 denotes the second frequency signals for the terminal C. For simplification, the number of first frequency signals (the frequency domain signals supplied from the clipping controller 120 to the transmission power adjuster 122) is equal for the terminal devices A (201) to C (203). As shown in FIG. 5B, the non-clipping rate for the terminal device A (201) positioned far from the base station device 210 is set to be high (the number of second frequency signals and the number of first frequency signals shown in FIG. 5 become close). Additionally, the non-clipping rate for the terminal device C (203) positioned close to the base station device 210 is set to be low (the difference between the number of second frequency signals and the number of first frequency signals shown in FIG. 5 becomes large), thereby reducing the effect of deterioration of the PAPR characteristics.

Here, the terminal devices 201 to 203 and the base station device 210 may be provided at specific places, or be mounted on a mobile vehicle.

In other words, the clipping controller 120 controls the non-clipping rate based on the distance relationship between the base station device 210 and the terminal device. Further, the wireless unit 110 controls the average power of inputs to the HP amplifier based on the control signal S2 that is based on the non-clipping rate output from the transmission power adjuster 122, thereby controlling an operating point and the like of the HP amplifier.

It is also possible to use the remaining transmission power (PH), other than to use the relationship regarding the distance from the base station device. This PH is assumed to be information to be periodically or non-periodically reported from the terminal device to the base station device. The PH is defined by formula (6), and may be used in lieu of the distance between the base station device and the terminal device.

$$PH(i)=P_{MAX}-P_{PUSCH}(i) \qquad \cdots(6)$$

$P_{PUSCH}$ denotes the transmission power of the data channel shown in the second embodiment. $P_{MAX}$ denotes the maximum allowable transmission power for transmission performed by the terminal device.

In other words, the clipping controller 120 controls the non-clipping rate based on the remaining transmission power (PH). Further, the wireless unit 110 controls the average power of inputs to the HP amplifier based on the control signal S2 that is based on the non-clipping rate output from the transmission power adjuster 122, thereby controlling an operating point or the like of the HP amplifier.

Additionally, it is also possible to set the non-clipping rate based on QoS (Quality of Service) for the terminal device, particularly, parameters relating to process delay, which is not deeply related to the PH, though. This is a method of setting a high non-clipping rate for data with low immediacy for the reason that as the non-clipping rate is lower, the reception process is more complicated (an increase in the number of times to iterate an iterative process in an advanced reception process that will be explained later).

In other words, the clipping controller 120 controls the non-clipping rate based on the QoS for the terminal device, particularly on parameters relating to the process delay. Further, the wireless unit 110 controls the average power of inputs to the HP amplifier based on the control signal S2 that is based on the non-clipping rate output from the transmission power adjuster 122, thereby controlling an operating point or the like of the HP amplifier.

Generally, a large number of terminal devices access one base station device. In such a case, to simplify management of terminal devices, the base station device does not set the non-clipping rate for each terminal device, but groups the terminal devices and controls the non-clipping rate for each group of terminal devices, thereby making the management easier.

Additionally, there is also another effective method in which the grouping is performed with respect only to whether or not clipping is performed, and a non-clipping rate is set every time communication is performed. In this case, for a group for which clipping is performed, including a case in which the non-clipping rate is 1, a non-clipping rate is determined based not only on the transmission power of a terminal device, but also on the number of RBs for which transmission is performed in the same timing. For the group for which clipping is not performed, a non-clipping rate is set to be 1.

In other words, the clipping controller 120 does not set a non-clipping rate for each terminal device, but groups the terminal devices and controls the non-clipping rate for each group of terminal devices. Further, the wireless unit 110 controls the average power of inputs to the HP amplifier based on the control signal S2 that is based on the non-clipping rate output from the transmission power adjuster 122, thereby controlling an operating point and the like of the HP amplifier.

As explained above, in light of the fact that the CM characteristics (PAPR characteristics) differ according to the clipping rate, the average power of inputs to the HP amplifier is controlled based on the clipping rate, thereby improving the cell throughput and the throughput for terminal devices.

(Fourth Embodiment)

A fourth embodiment is a method of communicating control signals and generating signals in a case where the clipped DFT-S-OFDM is effectively used for an uplink for a cellular system.
Firstly, a method for a base station device to set a non-clipping rate is explained. For simplification of explanations, it is assumed here that the base station device can perform an advanced reception process (resulting in small deterioration of demodulation performance due to the clipping), and that the remaining transmission power is periodically reported from a terminal device. Additionally, it is assumed that the terminal devices A, B, and C (201 to 203) shown in the third embodiment perform access at the same time, and that non-clipping rates for the respective terminal devices are set to be the values shown in FIG. 6. Explanations are given here with respect to a case in which 1RB includes 6 subcarriers, and 2RBs are assigned to each of the terminal device A (201) and the terminal device C (203), and 4RBs are assigned to the terminal device B (202).
FIG. 7A is a diagram illustrating assignment in a conventional case where clipping is not performed. FIG. 7B is a diagram illustrating how each terminal device performs clipping based on a non-clipping rate specified or preliminarily reported to the terminal device. Here, it is assumed that clipping is performed in units of RBs. Additionally, it is assumed that clipping rates for the respective terminal devices are not lower than the non-clipping rates shown in FIG. 6, and that clipping is performed using a non-clipping rate close to the set non-clipping rate. As shown in FIG. 7A, a reference symbol sg201 denotes transmission signals for which clipping is not performed. A reference symbol sg211 denotes transmission signals for terminal device A. A reference symbol sg212 denotes transmission signals for the terminal device B. A reference signal sg213 denotes transmission signals for the terminal device C.
As shown in FIG. 7B, a reference symbol sg311 denotes signals resulting from clipping with the non-clipping rate C=1 performed on signals (reference symbol sg301) for the terminal device A (user A) to be subjected to the clipping. Similarly, a reference symbol sg312 denotes signals resulting from clipping with the non-clipping rate C=0.667 (which is equal to or lower than 0.75) performed on signals (reference symbol sg302) for the terminal device B (user B) to be subjected to the clipping. Similarly, a reference symbol sg313 denotes signals resulting from clipping with the non-clipping rate C=0.5 performed on signals (reference symbol sg303) for the terminal device C (user C) to be subjected to the clipping. Accordingly, as shown in FIG. 7B, in the case of the fourth embodiment, the numbers of RBs to be used by each terminal device after the clipping are 2RBs (reference symbol sg311) for the terminal device A (201), 3RBs (reference symbol sg312) for the terminal device B (202), and 1RB (reference symbol sg313) for the terminal device C (203). Here, a reference symbol sg321 denotes data to be clipped. Additionally, it is assumed in FIG. 7B that clipping is performed in decreasing order of frequency. Here, clipping may be performed in increasing order of frequency. FIG. 7C is a diagram illustrating arrangement after the clipping. As shown in FIG. 7C, transmission signals sg401 includes 2RBs (reference symbol sg411) for the terminal device A (user A), 3RBs (reference symbol sg412) for the terminal device B (user B), and 1RB (reference symbol sg413) for the terminal device C (user C). Additionally, it can be understood from FIG. 7C that no assignment is made to RB7 and RB8, and that other users can be further multiplexed.
Accordingly, in a case where the base station device sets a non-clipping rate, the base station device reports information relating to "the number allocated to RB to be used" and "a non-clipping rate or the number of RBs before the clipping is performed," thereby making it possible to use the clipped DFT-S-OFDM. However, in a case where the non-clipping rate is preliminarily determined between the base station device and the terminal devices, "the non-clipping rate or the number of RBs before the clipping is performed" may not be reported.
In other words, in a case where the clipped DFT-S-OFDM is used, the base station device reports to the terminal devices, information relating to "the number allocated to RB to be used" and "a non-clipping rate or the number of RBs before the clipping is performed," thereby setting the non-clipping rate.
Further, a method of improving the throughput per terminal device, not the method of increasing the number of users to be multiplexed compared to the conventional case, is explained with reference to FIGS. 8A to 8C.
FIG. 8A is a diagram illustrating a method of improving the throughput per terminal device (a diagram illustrating assignment in a case where clipping is not performed). FIG. 8B is a diagram illustrating a method of improving the throughput per terminal device (a diagram illustrating how each terminal device performs clipping according to a non-clipping rate). FIG. 8C is a diagram illustrating a method of improving the throughput per terminal device (a diagram illustrating arrangement after clipping is performed).
As shown in FIG. 8A, a reference symbol sg501 denotes transmission signals for which clipping is not performed. A reference symbol sg511 denotes transmission signals for the terminal device A. A reference symbol sg512 denotes transmission signals for the terminal device B. A reference symbol sg513 denotes transmission signals for the terminal device C.

As shown in FIG. 8B, a reference symbol sg611 denotes signals resulting from clipping with the non-clipping rate C=1 performed on signals (reference symbol sg601) for the terminal device A (user A) to be subjected to the clipping. Similarly, a reference symbol sg612 denotes signals resulting from clipping with the non-clipping rate C=0.667 performed on signals (reference symbol sg602) for the terminal device B (user B) to be subjected to the clipping. Similarly, a reference symbol sg613 denotes signals resulting from clipping with the non-clipping rate C=0.5 performed on signals (reference symbol sg603) for the terminal device C (user C) to be subjected to the clipping. Here, in FIG. 8B, a reference symbol sg621 is data to be clipped.

As shown in FIG. 8C, a reference symbol sg701 denotes transmission signals resulting from the clipping. A reference symbol sg711 denotes transmission signals for the terminal device A. A reference symbol sg712 denotes transmission signals for the terminal device B. A reference symbol sg713 denotes transmission signals for the terminal device C.

Different from FIGS. 7A to 7C, FIGS. 8A and 8C show the same waveform. The difference from the FIGS. 7A to 7C is FIG. 8B. In this method, after the number (N) of subcarriers to be assigned to each user is determined, the number M of signals to be input to the spectrum clipper 104 is calculated. According to this method, it is possible to improve the throughput for users other than the terminal device A (201) associated with the non-clipping rate 1, compared to the conventional case. It is assumed in FIG. 8B that the clipping is performed in decreasing order of frequency band. Here, the clipping may be performed in increasing order of frequency.

In other words, the number M of signals to be input to the spectrum clipper 104 is calculated according to the non-clipping rate after the number (N) of subcarriers to be assigned to each user, thereby improving the throughput compared to the conventional case.

Hereinafter, a method for the terminal device to set a non-clipping rate is explained with reference to FIGS. 9A to 9C.

The basic preconditions for explanations are the same as those in the case where the base station device sets a non-clipping rate. FIG. 9A is a diagram illustrating a method of improving the throughput per terminal device (a diagram illustrating assignment in a case where clipping is not performed). FIG. 9B is a diagram illustrating a method of improving the throughput per terminal device (a diagram illustrating how each terminal device performs clipping according to a non-clipping rate). FIG. 9C is a diagram illustrating a method of improving the throughput per terminal device (a diagram illustrating arrangement after clipping is not performed). Here, it is assumed that each terminal device performs clipping not in units of RBs, but in units of subcarriers from both sides of a band as shown in FIG. 9B. Additionally, FIG. 9B shows that the terminal device B (202) and the terminal device C (203) use non-contiguous RBs.

As shown in FIG. 9A, a reference symbol sg801 denotes transmission signals for which clipping is not performed. A reference symbol sg811 denotes transmission signals for the terminal device A. Reference symbols sg812, sg814, and sg816 denote transmission signals for the terminal device B. Reference symbols sg813 and sg815 denote transmission signals for the terminal device C.

As shown in FIG. 9B, a reference symbol sg911 denotes signals resulting from clipping with the non-clipping rate C=1 performed on signals (reference symbol sg901) for the terminal device A (user A) to be subjected to the clipping. Similarly, a reference symbol sg912 denotes signals resulting from clipping with the non-clipping rate C=0.667 performed on signals (reference symbol sg902) for the terminal device B (user B) to be subjected to the clipping. Similarly, a reference symbol sg913 denotes signals resulting from clipping with the non-clipping rate C=0.5 performed on signals (reference symbol sg903) for the terminal device C (user C) to be subjected to the clipping. Here, in FIG. 9B, a reference symbol sg921 is data to be clipped.

As shown in FIG. 9C, a reference symbol sg1001 denotes transmission signals resulting from the clipping. A reference symbol sg1011 denotes transmission signals for the terminal device A. Reference symbols sag1012, sg1014, and sg1016 denote transmission signals for the terminal device B. Reference symbols sg1013 and sg1015 denote transmission signals for the terminal device C. Here, in FIG. 9C, a reference signal sg1021 is data to be clipped.

FIG. 9C illustrates the assignment of RBs after the clipping, and shows that subcarriers not used remain at some positions of the band. In this case, it is not possible to newly multiplex other users with respect to the clipped subcarriers, compared to the case of FIGS. 7A to 7C where the base station device makes settings for clipping. If there are neighboring cells, however, subcarriers do not cause interfere with those neighboring cells, thereby enhancing the throughput. Additionally, each terminal device independently performs clipping. For this reason, it can be said that this method is a method with high compatibility with a system that does not perform clipping at all.

Additionally, a clipping method is set for each cell, thereby increasing the probability of using subcarriers not to be used by other cells, resulting in an enhancement of communication performance. Accordingly, in a case where each terminal device sets a non-clipping rate, the base station device just reports to the terminal device, only the "number to be used."

In other words, the terminal device sets, for each cell, a non-clipping rate or a clipping method. Thereby, even if there are neighboring cells, subcarriers do not cause interference with those neighboring cells, thereby increasing the probability of using subcarriers not to be used by other cells, resulting in an enhancement of communication performance.

As explained above, in light of the fact that the CM characteristics (PAPR characteristics) differ according to the clipping rate, the base station device or the terminal device sets the non-clipping rate, and changes the transmission power based on the clipping rate, thereby improving the cell throughput and the throughput for terminal devices.

(Fifth Embodiment)

A fifth embodiment is explained with respect to a configuration of a wireless reception device (base station device) that can reproduce transmission data without causing great deterioration of the characteristics, using non-linear iterative equalization (such as frequency-domain SC/MMSE turbo equalization), even in a case where the base station device receives signals whose spectra are partially clipped. The fifth embodiment corresponds to the advanced reception process shown in the first to fourth embodiments.

FIG. 10 is a block diagram illustrating a base station device according to the fifth embodiment. As shown in FIG. 10, the base station device according to the fifth embodiment includes: a reception antenna unit 500; a wireless unit 501; an A/D converter 502; a synchronizer 503; a CP remover 504; an S/P converter 505; an FFT unit 506; a subcarrier demapper 507; a first zero inserter 508; a canceller 509; an equalizer 510; a demodulator and error correction decoder 511; an iteration controller 512; a determining unit 513; a channel estimator 514; a second zero inserter 515; a channel multiplier 516; a DFT unit 517; and a replica generator 518.

The wireless unit 501 receives a signal received by the reception antenna unit 500 and converts the received signal into an A/D-convertible frequency signal, and outputs the converted signal to the A/D converter 502.

The A/D converter 502 receives the converted signal, and converts the received signal from an analog signal to a digital signal, and outputs the converted signal to the synchronizer 503.

The synchronizer 503 receives the signal converted into the digital signal, and establishes symbol synchronization on the input signal. Then, the synchronizer 503 outputs to the CP remover 504, the signal for which the symbol synchronization is established.

The CP remover 504 receives the signal for which the symbol synchronization is established, and removes a CP for each symbol from the signal for which symbol synchronization is established. Then, the CP remover 504 outputs to the S/P converter 505, the signal from which the CP for each symbol is removed.

The S/P converter 505 receives the signal from which the CP for each symbol is removed, and converts the received signal from which the CP for each symbol is removed, from a serial signal to parallel signals. Then, the S/P converter 505 outputs to the FFT unit 506, the signal converted into the parallel signals.

The FFT unit 506 receives the signal converted into the parallel signals, and transforms the signal converted into the parallel signals, from time domain signal into frequency domain signals. Then, the FFT unit 506 outputs to the subcarrier demapper 507, the signals converted into the frequency domain signals.

The subcarrier demapper 507 demaps the signals converted into the frequency domain signals, into signals for each user. Then, the subcarrier demapper 507 outputs to the first zero inserter 508, the signals demapped into the signals S501 for each user. Additionally, the signals S501 demapped by the subcarrier demapper 507 are less in number than outputs of DFT used on the transmitting side. Further, the subcarrier demapper 507 extracts a pilot signal S503 for channel estimation, from the signals transformed into the frequency domain signals. Then, the subcarrier demapper 507 outputs the extracted pilot signal S503 to the channel estimator 514. Subsequent signal processes are performed for each reception signal of each user.

The first zero inserter 508 receives the signal S501 demapped into the signals for each user, and inserts zero into the same frequency elements as the signals clipped on the side of the wireless transmission device, with respect to the signal S501 demapped into the signals for each user. Then, the first zero inserter 508 outputs to the canceller 509, the signal S502 into which zero is inserted. This is operation of adding zero to both sides or either side of the signal output from the subcarrier demapper 507. According to this operation, the frequency signals equal in number to the outputs from the DFT used on the transmitting side are output from the first zero inserter 508.

The channel estimator 514 receives the pilot signal S503 for channel estimation. Then, the channel estimator 514 calculates a channel estimation value using the received pilot signal S503, and outputs the calculated channel estimation value to the second zero inserter 515.

The second zero inserter 515 receives the calculated channel estimation value S505. Then, the second zero inserter 515 inserts zero into the clipped positions of the spectra, with respect to the channel estimation value S505. Then, the second zero inserter 515 outputs to the equalizer 510 and the channel multiplier 516, the channel estimation value into which zero is inserted.

The channel multiplier 516 receives the channel estimation value S505 into which zero is inserted. Then, the channel multiplier 516 multiples the channel estimation value S505 into which zero is inserted, by the frequency domain signals output from the DFT unit 517. Then, the channel multiplier 516 outputs to the canceller 509, a result of the multiplication.

The canceller 509 receives the signal into which zero is inserted, and the result of the multiplication of the channel estimation value S505. Based on the reliability of the received signal, the canceller 509 subtracts from the received signal, a soft replica generated by the replica generator 518 and the result of the multiplication of the channel estimation value S505 into which zero is inserted at the clipped positions of the spectra. Thus, regarding the frequency-domain SC/MMSE turbo equalization to be performed in the fifth embodiment, the replica of a desired signal is once cancelled to calculate elements of the remaining signal.

This is because the equalizer 510 that will be explained later performs inverse matrix arithmetic, and it is necessary to perform inverse matrix arithmetic multiple number of times corresponding to the number of desired signals included in a block. For this reason, remaining elements resulting from cancelling of all replicas are input to the equalizer 510, and thereby the residue can be treated equally in the block. Thereby, all weights can be calculated by performing inverse matrix arithmetic only once in the block. In other words, a replica is separately input to the equalizer 510 and reconstructed, thereby reducing the amount of the inverse matrix arithmetic. Here, the canceller 509 does not generate a signal replica for the first process, and therefore outputs the reception signal to the equalizer 510 as it is without performing the cancelling process.

The equalizer 510 performs equalization of signals using the residual element that is an output of the canceller 509, the channel estimation value S505 of the desired signal that is the output of the second zero inserter 515, and the replica of the desired signal that is the output of the replica generator 518. Specifically, the equalizer 510 calculates an optimal weight from the residual element, the channel estimation value, and the replica of the signal. Then, the equalizer 510 outputs to the demodulator and error correction decoder 511, a time domain signal resulting from the final equalization, which is multiplied by that optimal weight. Here, no replica is input in the first process. For this reason, the first process is equal to the conventional MMSE (minimum mean squared error) equalization that does not perform cancelling. Thus, the wireless reception device of the fifth embodiment performs equalization while regarding the spectra clipped on the side of the wireless transmission device as if those spectra had been lost by channel fading. In such a manner, it is possible to properly reproduce a signal supposed to be transmitted originally (i.e., the signal before clipping is performed on the transmitting side).

The demodulator and error correction decoder 511 receives the equalized signal. Then, the demodulator and error correction decoder 511 performs demodulation and error correction on the received signal. Then, the demodulator and error correction decoder 511 calculates LLR (Log Likelihood Ratio) of encoded bits with higher reliability than the signal resulting from the demodulation and the error correction. Then, the demodulator and error correction decoder 511 outputs to the iteration controller 512, the calculated LLR and the signal resulting from the demodulation and the error correction.

The iteration number controller 512 receives the calculated LLR and the signal resulting from the demodulation and the error correction. Based on the received LLR, the iteration number controller 512 calculates the number of times to iterate the process. Based on the result of the calculation, iteration number controller 512 controls the iterative process. In a case where the process is iterated, the iteration number controller 512 outputs to the replica generator 518, the LLR and the signal resulting from the demodulation and the error correction, in order to generate a soft replica of the signal. Additionally, the iteration number controller 512 performs the process a predetermined number of times. Thereafter, the iteration number controller 512 outputs to the determining unit 513, the signal resulting from the demodulation and error correction.

The replica generator 518 generates, according to the LLR of the encoded bits, a soft replica in proportion to the reliability thereof. Additionally, the replica generator 518 outputs the replica generated in such a manner to the DFT unit 517, in order to once cancel the desired frequency signals. Further, at the time of equalization, the replica generator 518 outputs the generated replica to the equalizer 510, in order to reconstruct the desired signal.

Thus, the processes of the canceller 509 to the iteration controller 512, and the processes of the channel 516 to the replica generator 518 are iteratively performed, thereby obtaining encoded bits whose reliability is gradually increased. After the processes are iterated the predetermined number of times controlled by the iteration controller 512, the determining unit 513 receives the signal which is output from the iteration controller 512 and which has been subjected to the demodulation and the error correction. The determining unit 513 performs hard decision on the received signal resulting from the demodulation and the error correction, to extract decoded data. Then, the determining unit 513 sets the extracted encoded data to be reception data S506 and outputs the reception data S506 to a signal processor (not shown) of the wireless reception device.

Additionally, an example of the configuration of the base station device, in which the base station device sequentially selects a reception signal of each user, and performs in series the process on the selected signal, has been shown in the fifth embodiment. However, the base station device may be provided with as many units as the users, such as the first zero inserters 508, the cancellers 509, the equalizers 510, the demodulation and error correction decoders 511, the replica generators 518, DFT units 517, the channel multipliers 516, and the like, so that the base station device can simultaneously perform the processes with respect to all the users. Further, the predetermined number of times may be fixed. Alternatively, it is possible to use adaptive control such that iterates the process until a result of the determination of the LLR performed by the demodulation and error correction decoder 511 has no errors.

The advanced reception process shown in the fifth embodiment has a problem on process delay due to the iterative process and the problem on the power consumption. With respect to the problem, only the terminal device that performs clipping performs the iterative process, thereby solving such problems without causing deterioration of the characteristics.
The above embodiments have been explained under the basic presumption that the unit of frequency to be used for access is referred to as an RB, and that the RB includes multiple subcarriers. However, those embodiments are applicable to a case where the RB includes one subcarrier.

As explained above, in light of the fact that the CM characteristics (PAPR characteristics) differ according to the clipping rate, the non-linear iterative equalization is used even in the case where a signal whose spectra are partially clipped is received, thereby improving the cell throughput and the throughput for terminal devices.

A program that operates in the mobile station device and the base station device according to the present invention is a program (a program causing a computer to function) that controls a CPU and the like so as to implement the functions of the above embodiments according to the present invention. Additionally, information used by these devices is temporarily stored in a RAM at the time of that process, and thereafter is stored in various ROM or HDD. The information is read by CPU according to need, and is subjected to modification and writing. A recoding medium that stores the program may be any of a semiconductor medium (such as a ROM, or non-volatile memory card), an optical recording medium (such as a DVD, an MO, an MD, a CD, or a BD), and a magnetic recording medium (such as a magnetic tape or a flexible disk). Further, the functions of the above embodiments are implemented not only by executing the loaded program, but also by performing, based on the instructions of that program, the processes in cooperation with an operating system or other application programs in some cases.

Additionally, in case of distribution to market, the program may be stored in a mobile recording medium for distribution, or may be transferred to a server computer accessed via a network, such as the Internet. In this case, a storage device of the server computer is included in the present invention. Further, part or all of the mobile station device and the base station device of the aforementioned embodiments may be implemented as an LSI that is a typical integrated circuit. Each functional block of the mobile station device and the base station device may be made individually into a chip. Alternatively, part or all of the functional blocks may be integrated and made into a chip. Moreover, a method of generating an integrated circuit is not limited to an LSI. An integrated circuit may be implemented as a dedicated circuit or a general purpose processor. Additionally, if technology of generating an integrated circuit substituted for the LSI is proposed along with the progress of the semiconductor technology, an integrated circuit generated by that technology may be used.

DESCRIPTION OF REFERENCE NUMERALS

100: encoder
101: modulator
102: S/P converter
103: DFT unit
104: spectrum clipper
105: subcarrier mapper
106: IFFT unit
107: P/S converter
108: CP inserter
109: D/A converter
110: wireless unit
111: transmission antenna unit
112: reception antenna unit
113: wireless unit
114: A/D converter
115: receiver
120: clipping controller
122: transmission power adjuster

**Claims**

**1.** A wireless communication system comprising:

a plurality of wireless transmission devices; and
a wireless reception device,

wherein each of the wireless transmission devices is configured to transmit data by transforming a time domain signal into frequency domain signals to obtain first frequency signals, clipping a part of the first frequency signals to generate second frequency signals, and allocating the second frequency signals onto subcarriers,
the wireless reception device is configured to demodulate, from signals received, time domain data transmitted, and
communication is performed using a clipping rate set for each of the wireless transmission devices, the clipping rate being the number of the second frequency signals divided by the number of the first frequency signals.

**2.** The wireless communication system according to claim 1, wherein information relating to a transmission power for the wireless transmission device is determined based on the clipping rate, or
the clipping rate is determined based on the information relating to the transmission power for the wireless transmission device.

**3.** The wireless communication system according to claim 2, wherein the information relating to the transmission power is at least one of the transmission power for the wireless transmission device, the allowable maximum power of a transmission amplifier included in the wireless transmission device, and a distance from the wireless transmission device to the wireless reception device.

**4.** The wireless communication system according to claim 3, wherein communication is performed without performing clipping in a case that a transmission power for transmitting data is higher than a predetermined value.

**5.** The wireless communication system according to claim 3, wherein the wireless transmission devices are grouped based on distances from the wireless reception device to the wireless transmission devices, and
the wireless transmission devices belonging to a group associated with a large distance from the wireless reception device are configured not to perform clipping.

**6.** The wireless communication system according to claim 1, wherein the wireless reception device is configured to report to the wireless transmission device, positions of subcarriers to which the second frequency signals are to be mapped, and any one of the number of first frequency signals and the clipping rate.

**7.** The wireless communication system according to claim 1, wherein the wireless reception device is configured to report to the wireless transmission device, information relating to positions of frequencies to be used by the wireless transmission device, and
the wireless transmission device is configured to perform transmission without using a part of the frequencies at the positions of the frequencies reported.

**8.** The wireless communication system according to claim 1, wherein the wireless transmission device is configured not to perform clipping in a case where the wireless transmission device operates in a low power consumption mode.

**9.** The wireless communication system according to claim 1, wherein the wireless reception device is configured to iteratively perform a demodulation process in a case that the wireless transmission device performs clipping to transmit data.

**10.** A wireless transmission device comprising:

a time-frequency-domain transformer configured to transform a time domain signal into frequency domain signals to generate first frequency signals;
a clipper configured to clip a part of the first frequency signals to generate second frequency signals;
a clipping controller configured to generate clipping control information based on a clipping rate that is the number of the second frequency signals divided by the number of the first frequency signals, and control the clipper;
a subcarrier mapper configured to map the second frequency signals onto subcarriers;
a transmission power adjuster configured to adjust, based on the clipping control information, a transmission power for a transmission signal including the subcarriers; and
a wireless unit configured to transmit transmission data based on the clipping rate controlled by the clipping controller and the transmission power adjusted by the transmission power adjuster.

**11.** The wireless transmission device according to claim 10, wherein in a case that each of a plurality of wireless transmission devices present within a coverage area of communication with the same wireless reception device has the same number of the first frequency signals, the transmission power adjuster is configured to adjust the transmission power such that the transmission power is higher as the clipping rate is higher.

**12.** The wireless transmission device according to claim 10, wherein the transmission power adjuster is configured to set the maximum value of the transmission power so as to differ based on the clipping rate.

**13.** The wireless transmission device according to claim 10, wherein the wireless unit further comprises a high power amplifier unit configured to perform high gain amplification, and
the transmission power adjuster is configured to adjust the transmission power so that an operating region of the high power amplifier differs according to the clipping rate.

**14.** The wireless transmission device according to claim 13, wherein the transmission power adjuster is configured to control an average power of inputs to the high power amplifier according to the clipping rate.

**15.** The wireless transmission device according to claim 13, wherein the transmission power adjuster is configured to control, based on the clipping rate, an average power of inputs to the high power amplifier so as to be lower than the maximum allowable transmission power for the wireless transmission device and to be within a linear region operating area.

**16.** A wireless transmission method for a wireless transmission device, comprising:

a time-frequency-domain transforming step for a time-frequency-domain transformer to transform a time domain signal into frequency domain signals to generate first frequency signals;
a clipping step for a clipper to clip a part of the first frequency signals to generate second frequency signals;
a clipping control step for a clipping controller to generate clipping control information based on a clipping rate that is the number of the second frequency signals divided by the number of the first frequency signals, and control the clipper;
a subcarrier mapping step for a subcarrier mapper to map the second frequency signals onto subcarriers;
a transmission power adjusting step for a transmission power adjuster to adjust, based on the clipping control information, a transmission power for a transmission signal including the subcarriers; and
a wireless step for a wireless unit to transmit transmission data based on the clipping rate controlled by the clipping controller and the transmission power adjusted by the transmission power adjuster.

FIG. 1

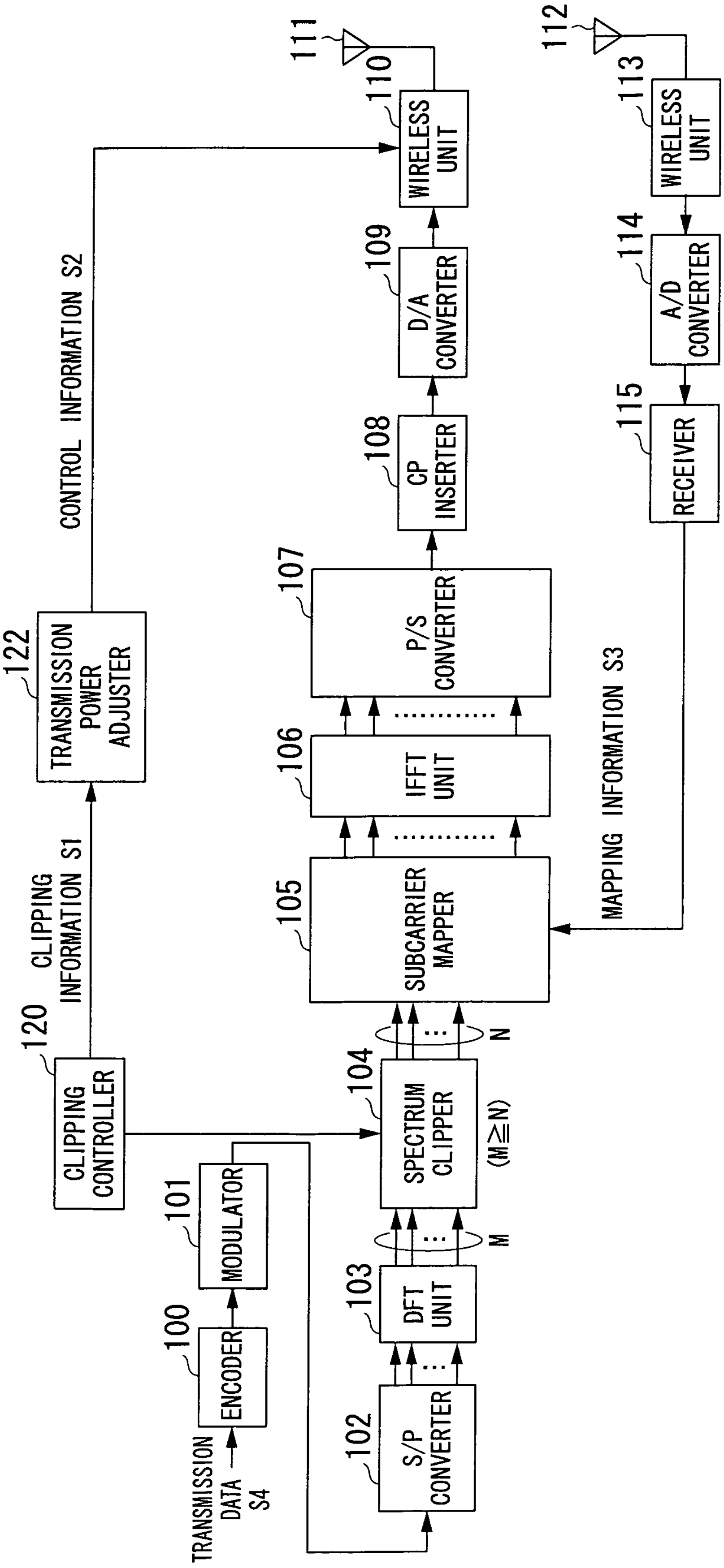

TRANSMISSION DATA S4
100
ENCODER
101
MODULATOR
102
S/P CONVERTER
103
DFT UNIT
M
104
SPECTRUM CLIPPER
(M≧N)
N
105
SUBCARRIER MAPPER
106
IFFT UNIT
107
P/S CONVERTER
108
CP INSERTER
109
D/A CONVERTER
110
WIRELESS UNIT
111
112
113
WIRELESS UNIT
114
A/D CONVERTER
115
RECEIVER
MAPPING INFORMATION S3
120
CLIPPING CONTROLLER
CLIPPING INFORMATION S1
122
TRANSMISSION POWER ADJUSTER
CONTROL INFORMATION S2

FIG. 2

| NON-CLIPPING RATE | CM |
|---|---|
| 1 | 1.21 |
| 0.8 | 1.69 |
| 0.7 | 1.97 |
| 0.5 | 2.56 |

FIG. 3A

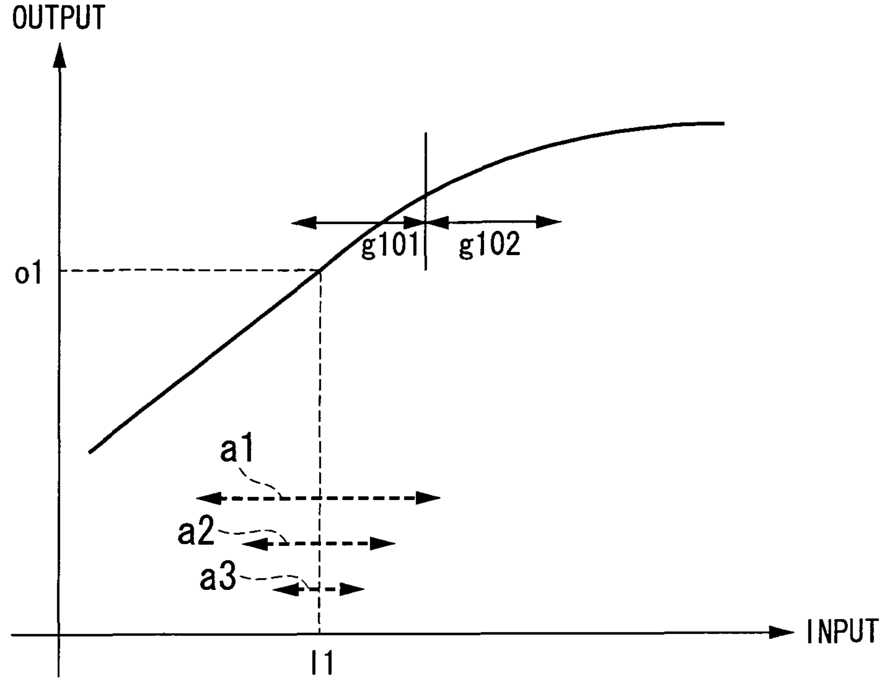
OUTPUT
o1
g101
g102
a1
a2
a3
INPUT
I1

FIG. 3B

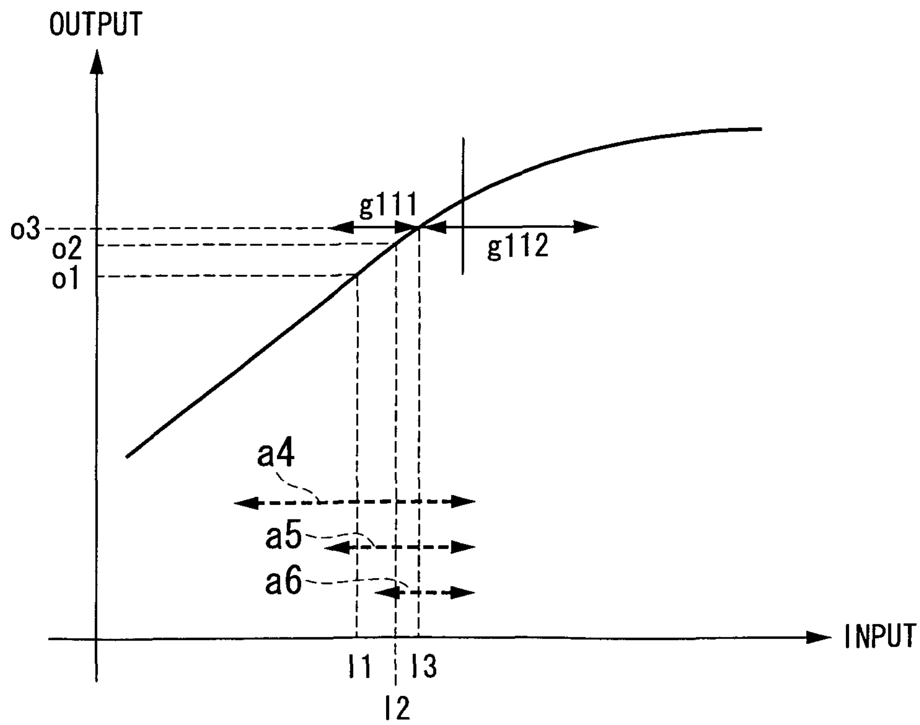
OUTPUT
o3
o2
o1
g111
g112
a4
a5
a6
INPUT
I1
I3
I2

FIG. 4

| AVERAGE POWER OF INPUTS TO HP AMPLIFIER X | NON-CLIPPING RATE |
|---|---|
| X≦I1 | C1 |
| I1<X≦I2 | C2 |
| I2<X≦I3 | C3 |
| I3<X | 1 |

FIG. 5A

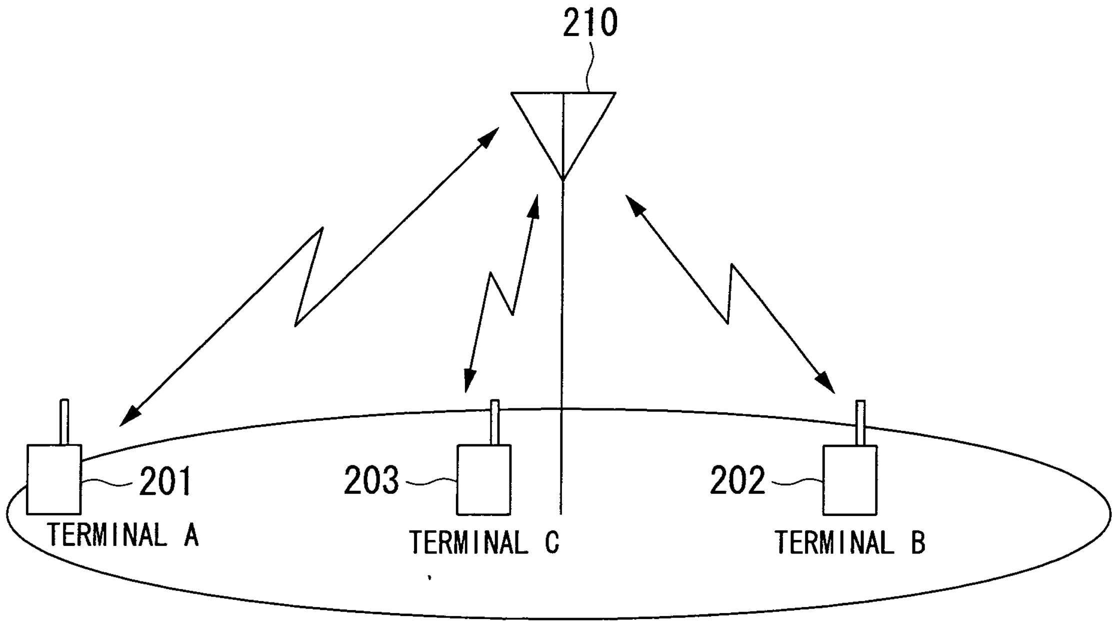
210
201
TERMINAL A
203
TERMINAL C
202
TERMINAL B

FIG. 5B

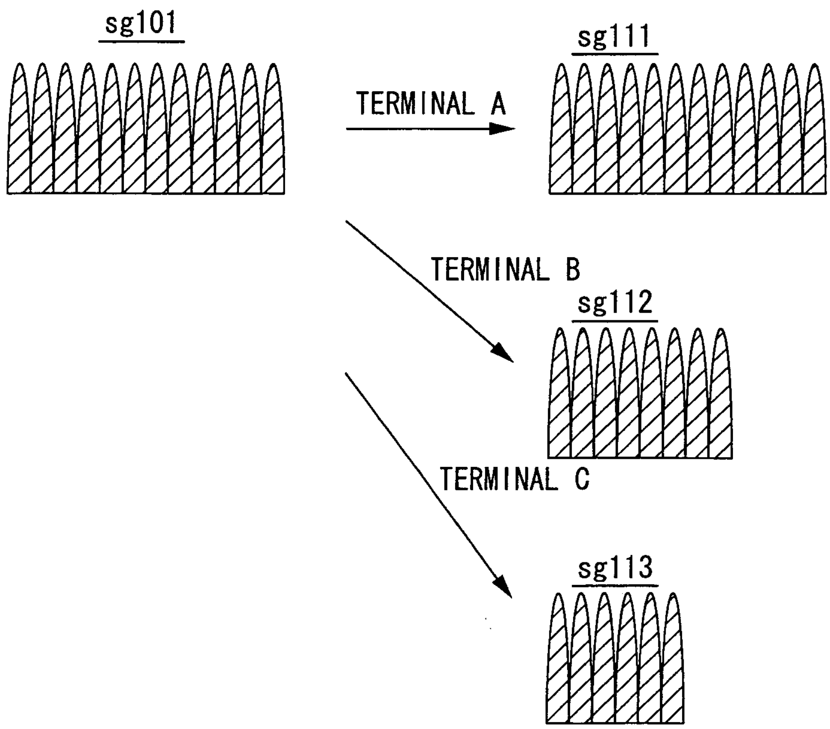
sg101
TERMINAL A
sg111
TERMINAL B
sg112
TERMINAL C
sg113

FIG. 6

| TERMINAL | NON-CLIPPING RATE |
|---|---|
| C | C1=0. 5 |
| B | C2=0. 667 |
| A | C3=1 |

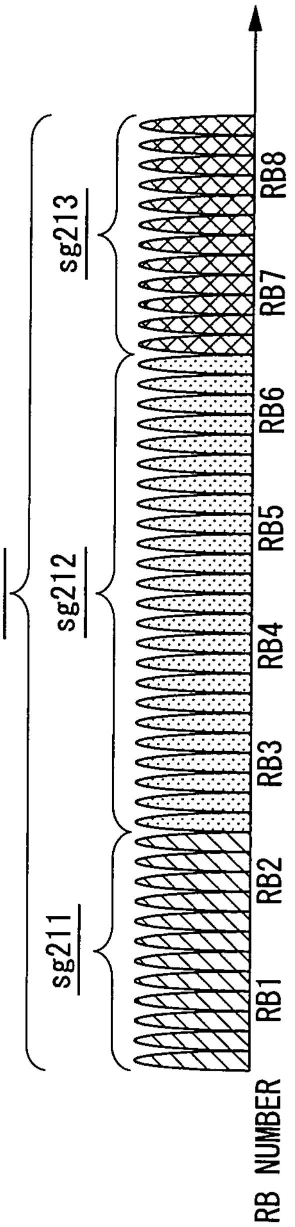
sg201
sg211
sg212
sg213
RB NUMBER
RB1
RB2
RB3
RB4
RB5
RB6
RB7
RB8

FIG. 7A

FIG. 7B

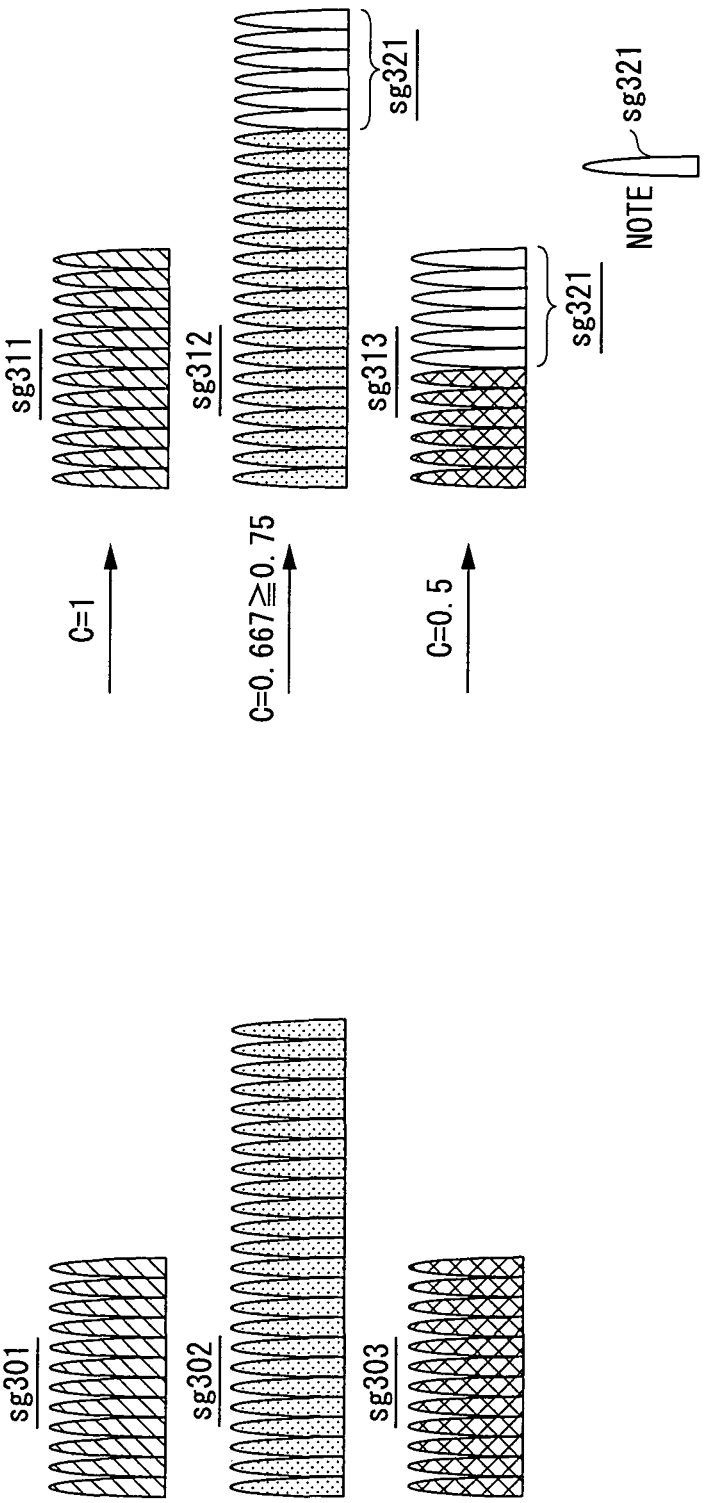
sg301
sg302
sg303
C=1
C=0. 667≧0. 75
C=0. 5
sg311
sg312
sg313
sg321
sg321
NOTE
sg321

FIG. 7C

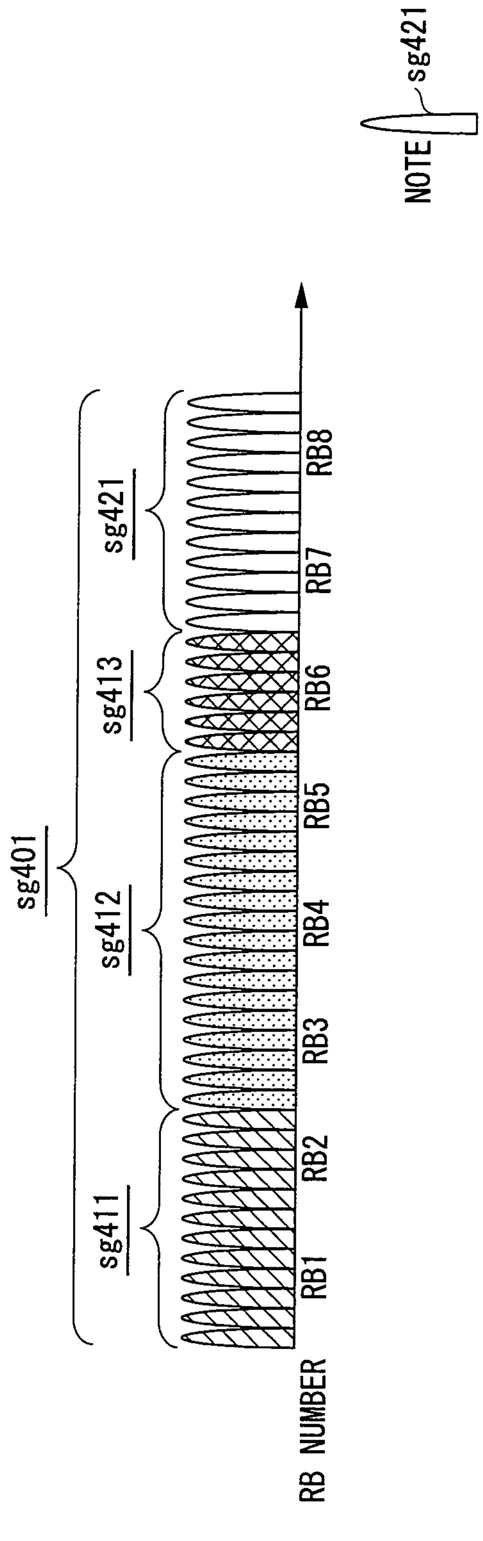
sg401
sg411
sg412
sg413
sg421
RB NUMBER
RB1
RB2
RB3
RB4
RB5
RB6
RB7
RB8
NOTE
sg421

FIG. 8A

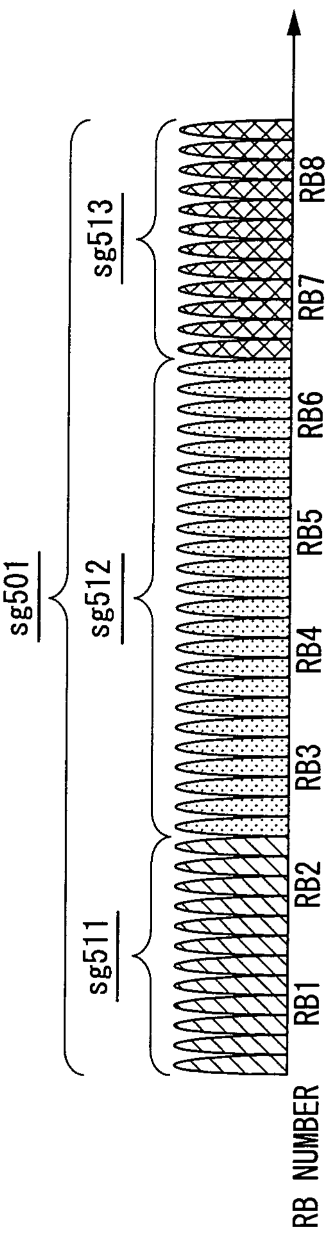
sg501
sg511
sg512
sg513
RB NUMBER
RB1
RB2
RB3
RB4
RB5
RB6
RB7
RB8

FIG. 8B

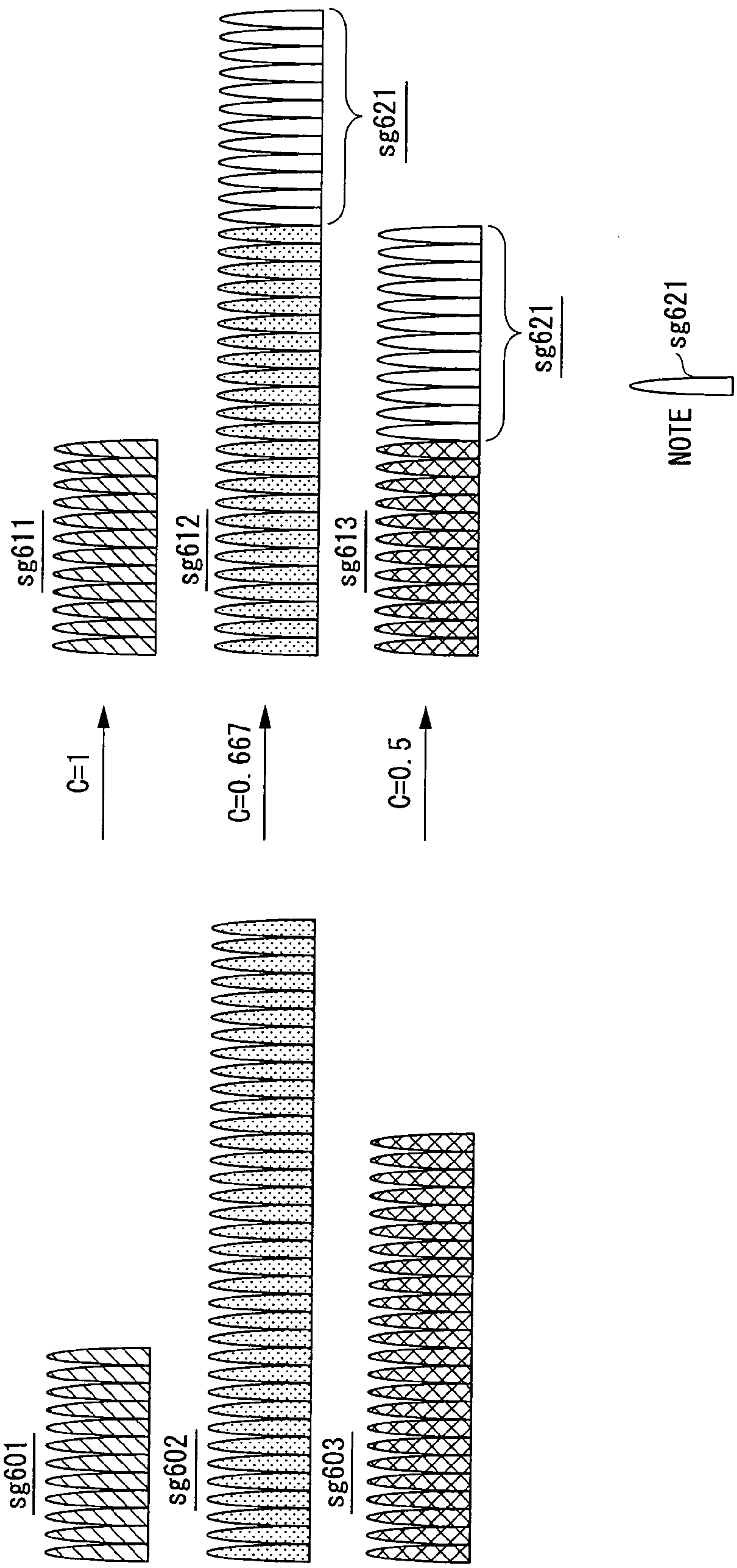
sg601
sg602
sg603
C=1
C=0. 667
C=0. 5
sg611
sg612
sg613
sg621
sg621
NOTE
sg621

FIG. 8C

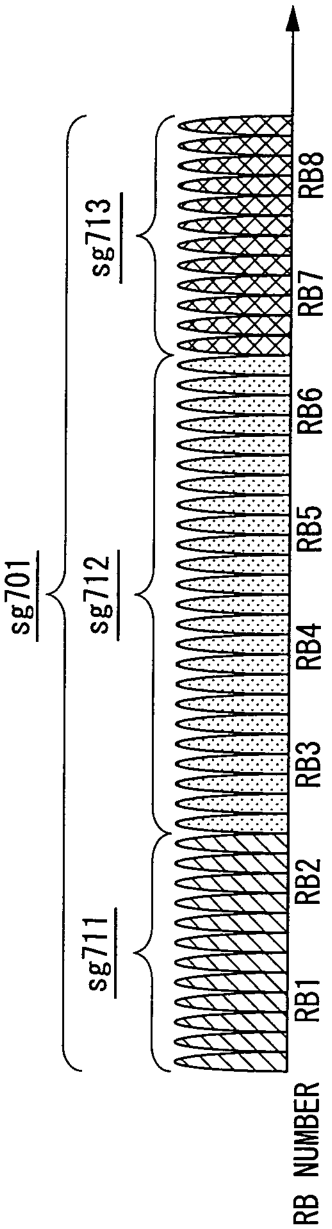
sg701
sg711
sg712
sg713
RB1
RB2
RB3
RB4
RB5
RB6
RB7
RB8
RB NUMBER

FIG. 9A

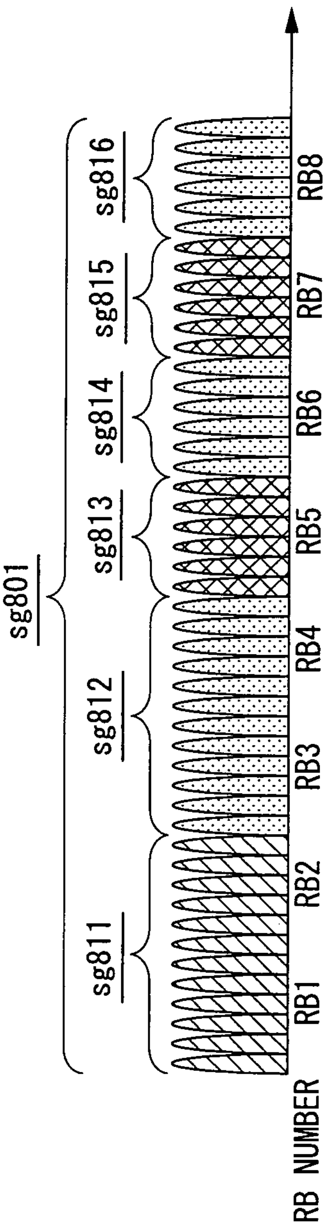
sg801
sg811
sg812
sg813
sg814
sg815
sg816
RB NUMBER
RB1
RB2
RB3
RB4
RB5
RB6
RB7
RB8

FIG. 9B

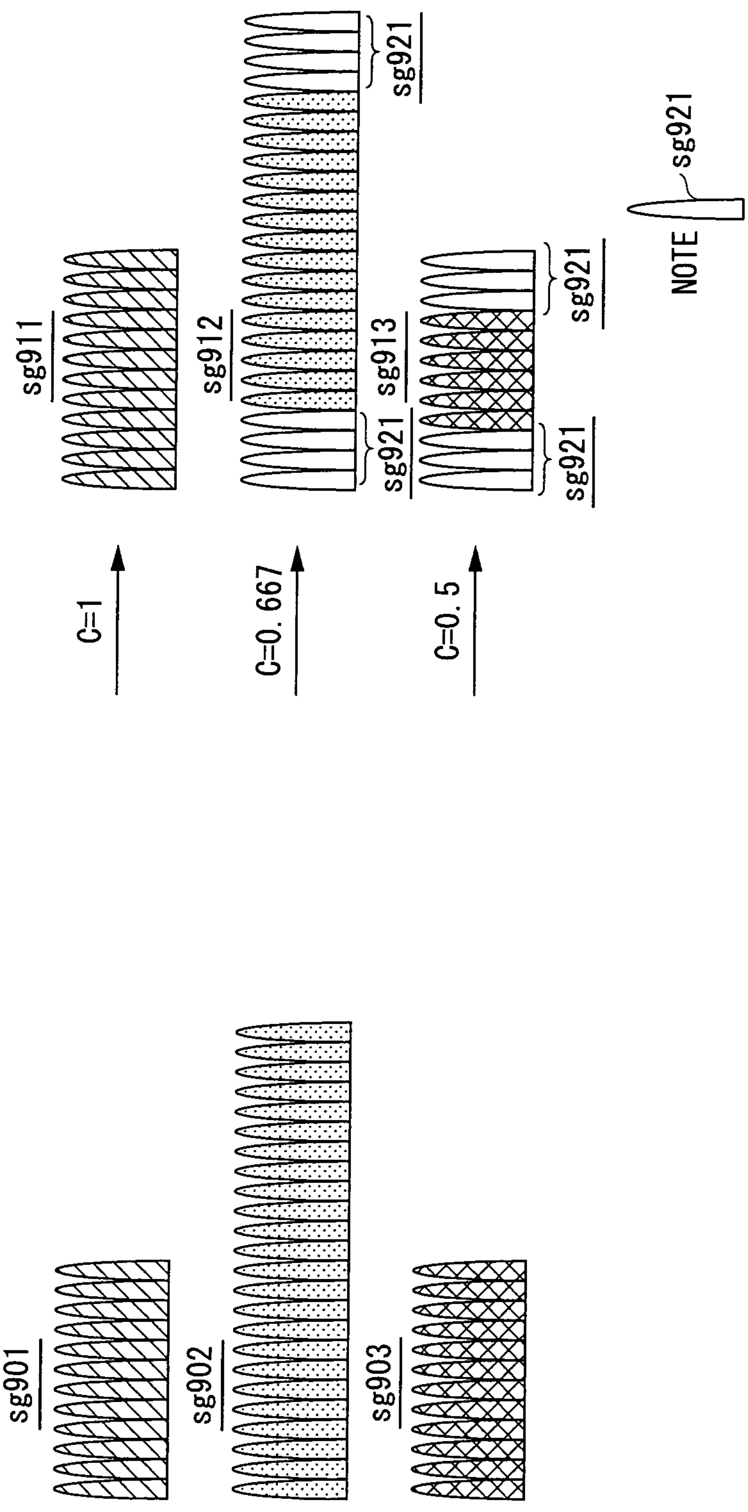
sg901
sg902
sg903
C=1
C=0. 667
C=0. 5
sg911
sg912
sg913
sg921
sg921
sg921
sg921
NOTE
sg921

FIG. 9C

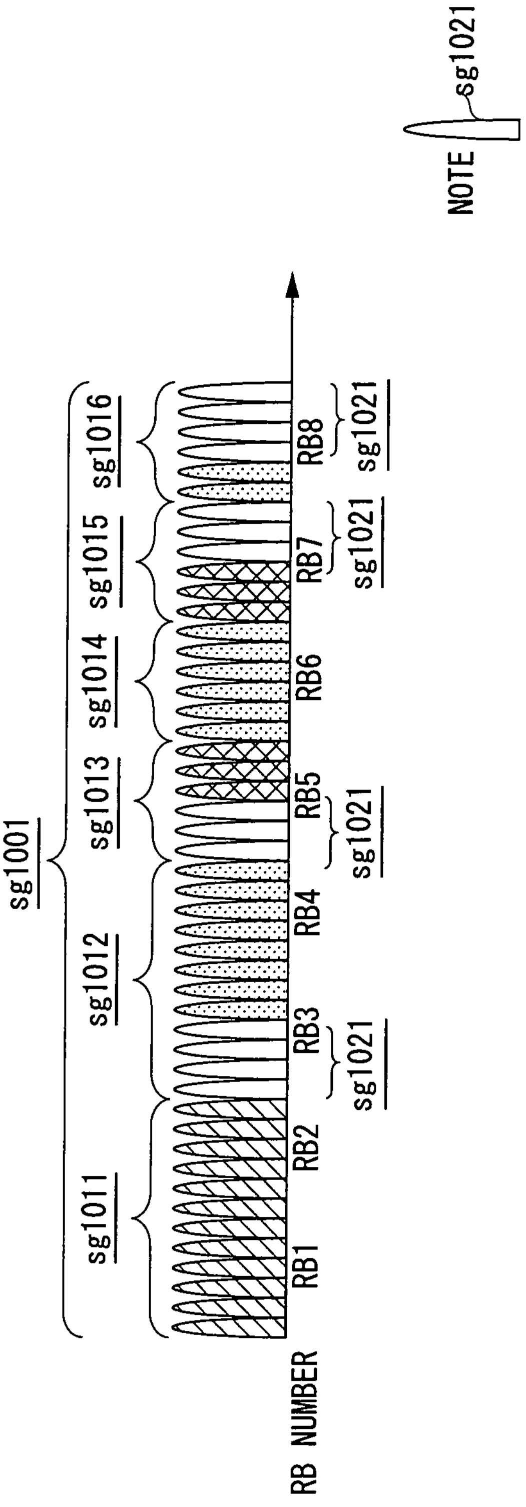
sg1001
sg1011
sg1012
sg1013
sg1014
sg1015
sg1016
RB NUMBER
RB1
RB2
RB3
RB4
RB5
RB6
RB7
RB8
sg1021
sg1021
sg1021
sg1021
NOTE
sg1021

FIG. 10

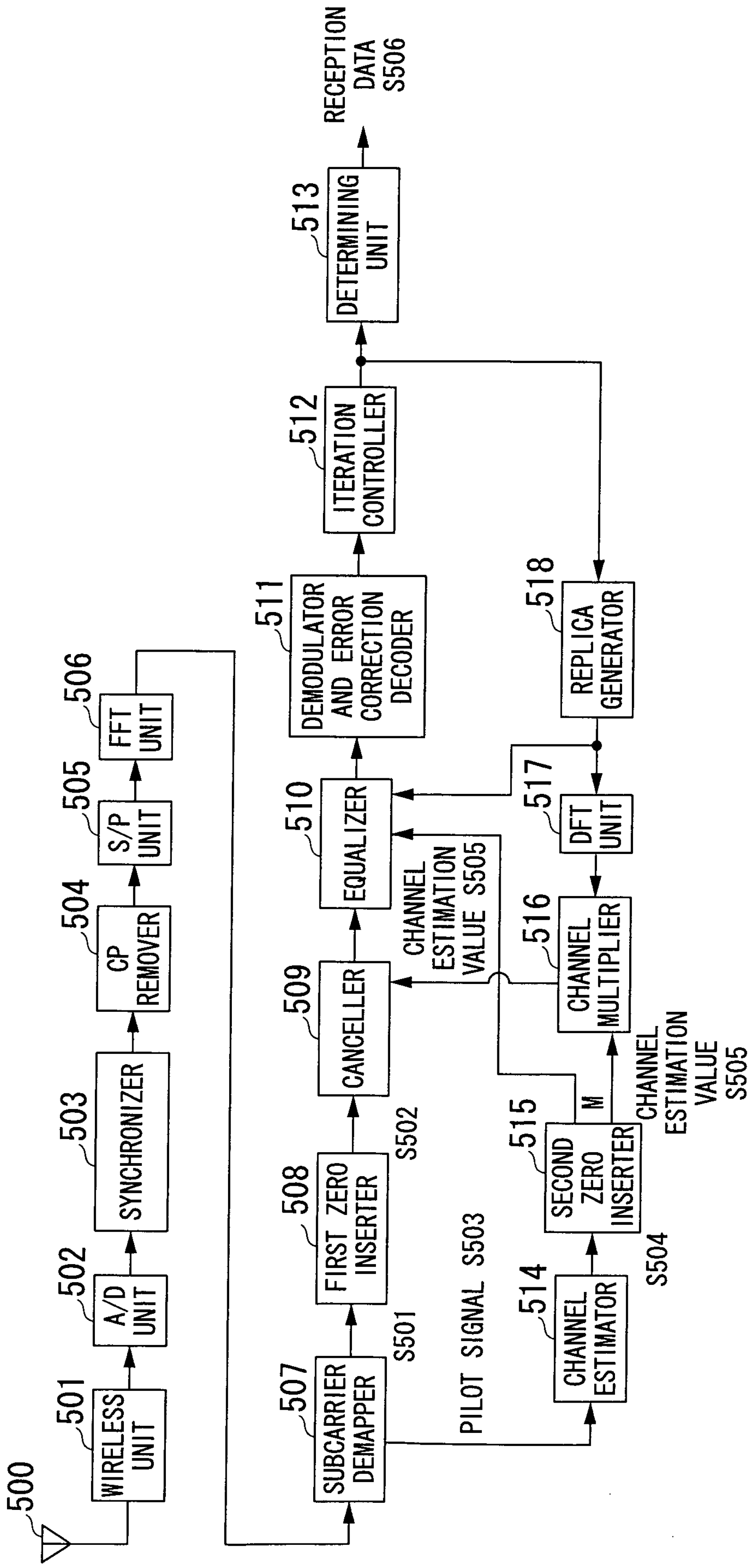
500
501
WIRELESS UNIT
502
A/D UNIT
503
SYNCHRONIZER
504
CP REMOVER
505
S/P UNIT
506
FFT UNIT
507
SUBCARRIER DEMAPPER
S501
508
FIRST ZERO INSERTER
S502
509
CANCELLER
510
EQUALIZER
511
DEMODULATOR AND ERROR CORRECTION DECODER
512
ITERATION CONTROLLER
513
DETERMINING UNIT
RECEPTION DATA S506
PILOT SIGNAL S503
514
CHANNEL ESTIMATOR
S504
515
SECOND ZERO INSERTER
M
CHANNEL ESTIMATION VALUE S505
516
CHANNEL MULTIPLIER
CHANNEL ESTIMATION VALUE S505
517
DFT UNIT
518
REPLICA GENERATOR

FIG. 11

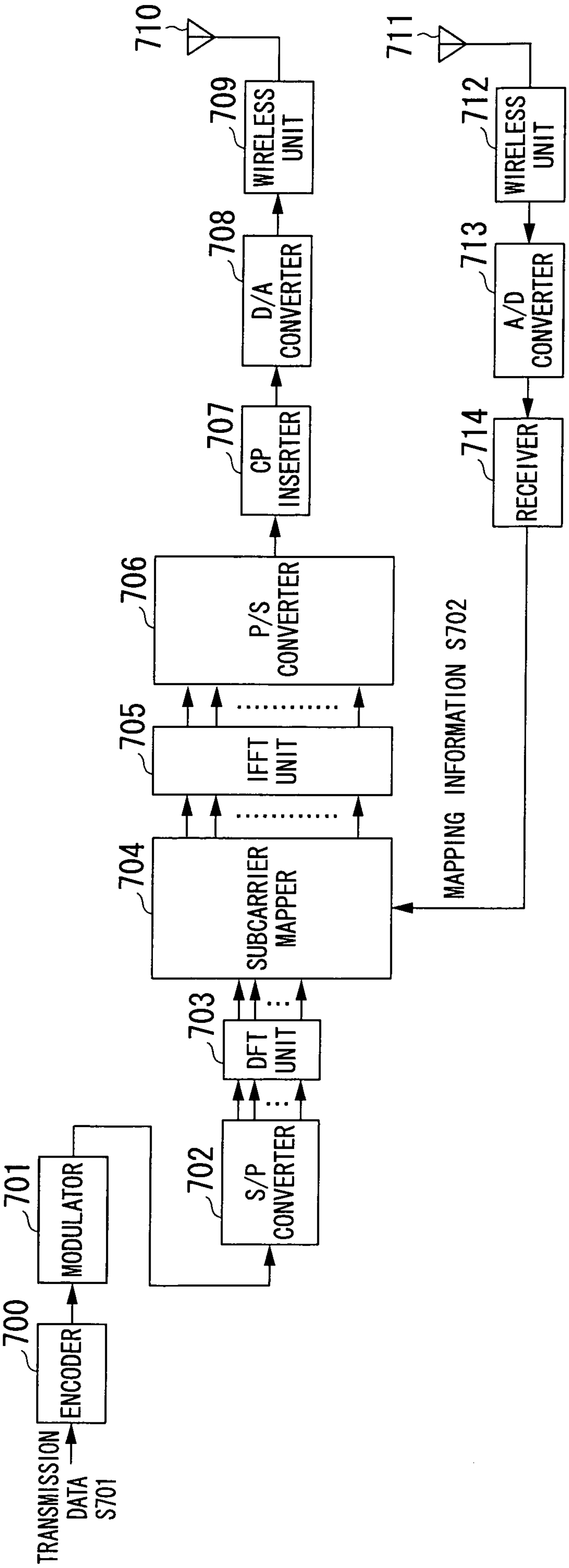
TRANSMISSION DATA S701
700
ENCODER
701
MODULATOR
702
S/P CONVERTER
703
DFT UNIT
704
SUBCARRIER MAPPER
705
IFFT UNIT
706
P/S CONVERTER
707
CP INSERTER
708
D/A CONVERTER
709
WIRELESS UNIT
710
711
712
WIRELESS UNIT
713
A/D CONVERTER
714
RECEIVER
MAPPING INFORMATION S702

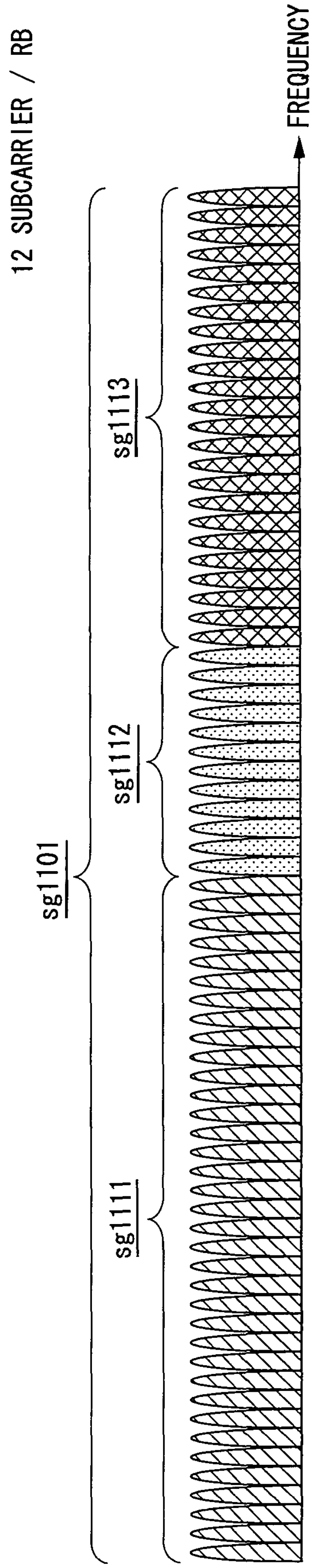


FIG. 12A

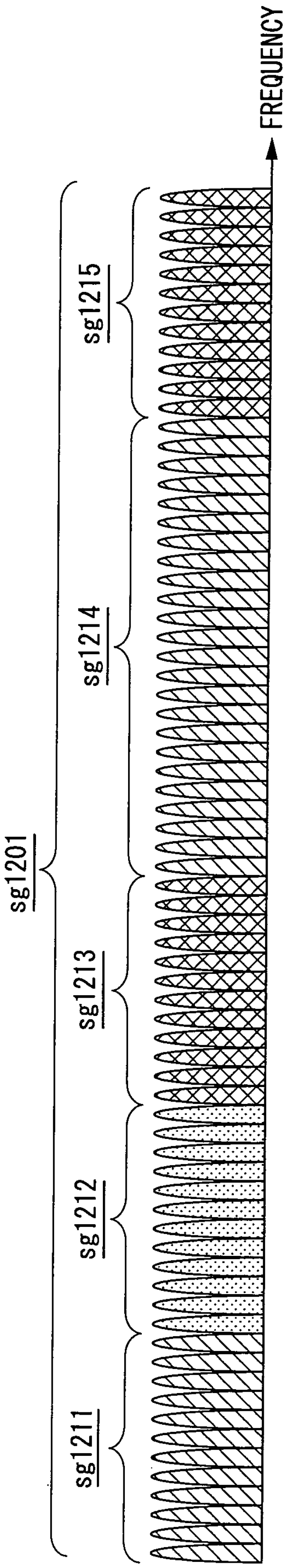


FIG. 12B

FIG. 13

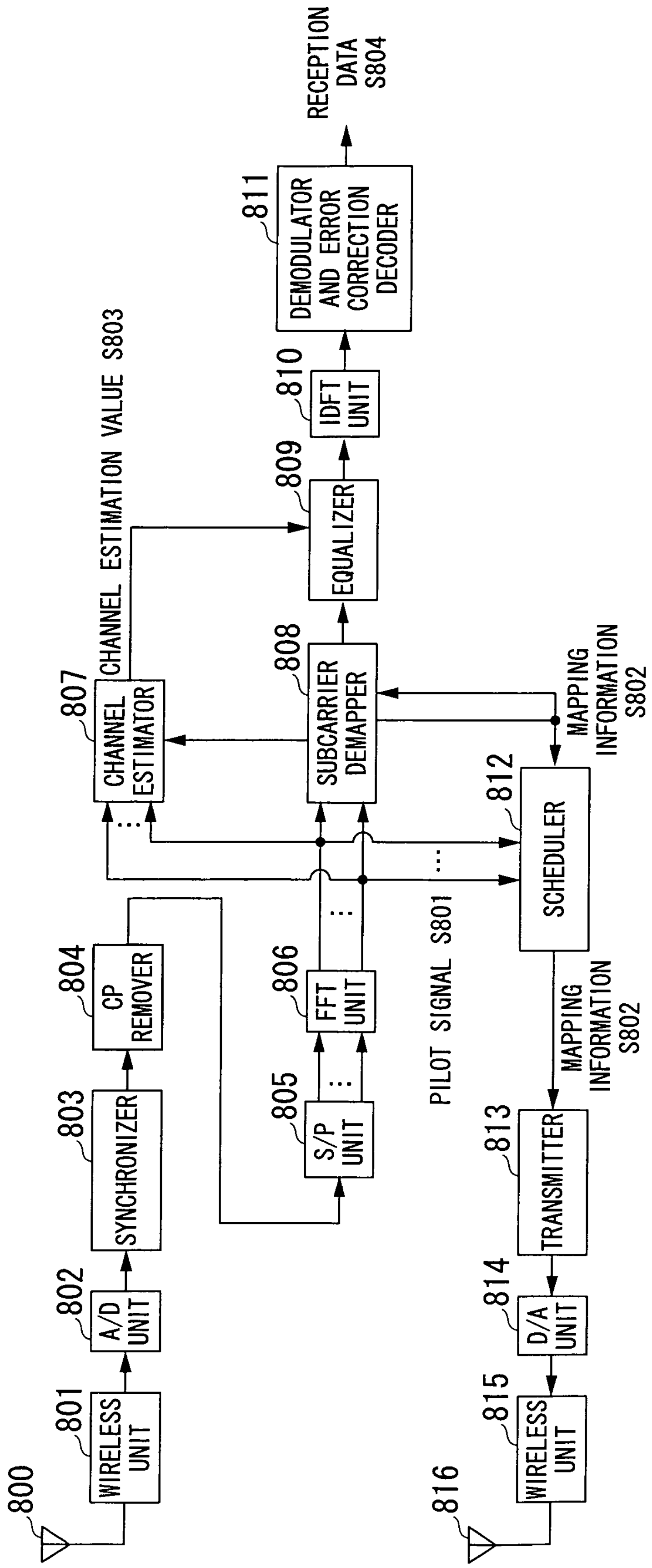
800
801
WIRELESS UNIT
802
A/D UNIT
803
SYNCHRONIZER
804
CP REMOVER
805
S/P UNIT
806
FFT UNIT
807
CHANNEL ESTIMATOR
808
SUBCARRIER DEMAPPER
809
EQUALIZER
810
IDFT UNIT
811
DEMODULATOR AND ERROR CORRECTION DECODER
RECEPTION DATA S804
CHANNEL ESTIMATION VALUE S803
PILOT SIGNAL S801
MAPPING INFORMATION S802
812
SCHEDULER
MAPPING INFORMATION S802
813
TRANSMITTER
814
D/A UNIT
815
WIRELESS UNIT
816

**INTERNATIONAL SEARCH REPORT**

International application No.
PCT/JP2011/053354

A. CLASSIFICATION OF SUBJECT MATTER
*H04J11/00*(2006.01)i, *H04J1/00*(2006.01)i

According to International Patent Classification (IPC) or to both national classification and IPC

B. FIELDS SEARCHED

Minimum documentation searched (classification system followed by classification symbols)
H04J11/00, H04J1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CiNii

C. DOCUMENTS CONSIDERED TO BE RELEVANT

| Category* | Citation of document, with indication, where appropriate, of the relevant passages | Relevant to claim No. |
|---|---|---|
| X<br>A | JP 2009-267508 A (Osaka University), 12 November 2009 (12.11.2009), entire text; all drawings & WO 2009/131155 A1 | 1-3,6-9<br>4,5,10-16 |
| A | Akihiko OKADA et al., "Study on Spectrum Division Multiplexing Technique exploiting Frequency Clipped Spectrum Shaping for Turbo Equalization", Proceedings of the 2007 IEICE General Conference Tsushin 1, 07 March 2007 (07.03.2007), page 528, B-5-114 | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 May, 2011 (09.05.11) | 24 May, 2011 (24.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/053354

C (Continuation). DOCUMENTS CONSIDERED TO BE RELEVANT

| Category* | Citation of document, with indication, where appropriate, of the relevant passages | Relevant to claim No. |
|---|---|---|
| A | Ryunosuke KAWAKITA et al., "A Study on Frequency Resource Managements exploiting Spectrum Clipped Transmit signals", Proceedings of the 2009 IEICE General Conference Tsushin 1, 04 March 2009 (04.03.2009), page 512, B-5-79 | 1-16 |
| A | WO 2009/131156 A1 (Osaka University), 29 October 2009 (29.10.2009), entire text; all drawings (Family: none) | 1-16 |
| A | WO 2007/132861 A1 (Sharp Corp.), 22 November 2007 (22.11.2007), entire text; all drawings & US 2009/0209256 A1 & EP 2020822 A1 | 1-16 |

Form PCT/ISA/210 (continuation of second sheet) (July 2009)

**INTERNATIONAL SEARCH REPORT**

International application No.
PCT/JP2011/053354

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 is publicly know as described in JP 2009-267508, and cannot be considered to be a technical feature which makes a contribution over the prior art.

In this connection, if claim 2 is deemed to be main invention, the inventions in claims 1 - 5, claim 6, claim 7, claim 8, claim 9, and claims 10 - 16 cannot be considered to share a special technical feature, and therefore cannot be considered to be a group of inventions which are so linked as to form a single general inventive concept.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010043095 A
- JP 2008081876 A